# EUROPEAN PATENT APPLICATION

(11) **EP 4 276 563 A1**
(43) Date of publication of application: **15.11.2023**
(21) Application number: 21917511.4
(22) Date of filing: 08.01.2021
(51) Int. Cl.: G05D 1/02

(54) **TRANSPORT SYSTEM AND TRANSPORT CONTROL METHOD**

(71) Applicant: Lexxpluss, Inc., Kawasaki-ku, Kawasaki City Kanagawa 2100007 (JP)
(72) Inventor: MIURA, Yasuyuki, Kawasaki City, Kanagawa 210-0007 (JP); ASO, Masaya, Kawasaki City, Kanagawa 210-0007 (JP)
(74) Representative: Osterhoff, Utz
(86) International application number: PCT/JP2021/000573
(87) International publication number: WO 2022/149285

(57) **Abstract**

[Problem] There has been a problem in that work efficiency cannot be improved because a movement target position of a conveyance vehicle or the like cannot be flexibly changed based on a position of an obstacle or an operator on a track, or the conveyance vehicle enters an unintended branch from a branching point.

[Solution] A conveyance system according to the present disclosure includes a conveyance vehicle configured to travel along a guide line laid on a traveling road. The conveyance vehicle includes: a guide line detection unit configured to detect the guide line; an object position detection unit configured to detect information on a position of an object around the conveyance vehicle; and a stop position determination unit configured to determine a stop position of the conveyance vehicle based on a result of detection by the object position detection unit.

## Description

### Field

The present disclosure relates to a conveyance system and a conveyance control method.

### Background

In recent years, autonomous unmanned conveyance vehicles have been practically used for conveying load within facilities such as factories and warehouses. In particular, a technique has been proposed that enables unmanned conveyance vehicles to travel along a predetermined rail track laid in a facility, to a predetermined destination position. In addition, Patent Literature 1 discloses a technique of detecting the distance from an obstacle by an obstacle detection device for detecting an obstacle ahead and implementing deceleration according to the distance in order to avoid collisions with an unmanned conveyance vehicle or the like ahead traveling along a track while avoiding damage to load being conveyed. In addition, Patent Literature 2 discloses a technique of implementing smooth traveling control at a branching point by offsetting the position of a conveyance vehicle in a lateral direction based on information on traveling direction at a point where a guide line formed by a guide tape is branched.

### Citation List

### Patent Literature

Patent Literature 1: Japanese Patent Application Laid-open No. 11-305837
Patent Literature 2: WO2010/150580 A1

### Summary

### Technical Problem

According to the technique described in Patent Literature 1, when there is an obstacle on a track on which the conveyance vehicle is scheduled to travel, the conveyance vehicle can be prevented from colliding with the obstacle. Still, work efficiency cannot be improved because the target position of the vehicle's movement cannot be flexibly changed when there is an obstacle or the like on the track. Furthermore, the conventional technique such as that in Patent Literature 2 has a problem in that the conveyance vehicle enters an unintended branch from the branching point, and cannot travel in a section where the guide line is interrupted.

The present disclosure is made in view of the above problem, and an object of the present disclosure is to provide a conveyance system and a conveyance control method that can improve work efficiency through operation determination based on the state on site, or to provide a conveyance system and a conveyance control method that can improve accuracy of traveling control at a branching point of a guide line.

### Solution to Problem

The present disclosure provides a conveyance system including a conveyance vehicle configured to travel along a guide line laid on a traveling road, in which the conveyance vehicle includes: a guide line detection unit configured to detect the guide line; an object position detection unit configured to detect information on a position of an object around the conveyance vehicle; and a stop position determination unit configured to determine a stop position of the conveyance vehicle based on a result of detection by the object position detection unit.

The present disclosure further provides a conveyance system including: a guide line that is laid on a traveling road surface and includes a plurality of codes; and a conveyance vehicle configured to travel along the guide line, in which the guide line includes a main line that is the guide line along which the conveyance vehicle travels, and a sub line that is the guide line laid while being separated by a predetermined distance from or being branched from the main line, the conveyance vehicle includes a guide line detection unit configured to detect the guide line and a traveling control unit configured to perform guide line following control to make the conveyance vehicle travel while maintaining a state in which the guide line is located within a detection range of the guide line detection unit, and the traveling control unit stops the guide line following control and performs predetermined traveling control determined in advance upon acquiring trigger information from the codes, and stops the predetermined traveling control and performs the guide line following control when the guide line detection unit detects the guide line that is the sub line while the predetermined traveling control is being performed.

The present disclosure further provides a conveyance control method for a conveyance vehicle that travels along a guide line laid on a traveling road, the method including: a guide line detection step of detecting the guide line; an object position detection step of detecting information on a position of an object around the conveyance vehicle; and a stop position determination step of determining a stop position of the conveyance vehicle based on the information on the position of the object detected in the object position detection step.

The present disclosure further provides a conveyance control method for a conveyance vehicle that travels along a guide line that is laid on a traveling road surface and includes a plurality of codes, the guide line including a main line that is the guide line along which the conveyance vehicle travels, and a sub line that is the guide line laid while being separated by a predetermined distance from or being branched from the main line, the method including: a guide line detection step of detecting the guide line; and a traveling control step of performing guide line following control to make the conveyance vehicle travel while maintaining a state in which the guide line is located within a detection range in the guide line detection step, in which the traveling control step includes stopping the guide line following control and performing predetermined traveling control determined in advance upon acquiring trigger information from the codes, and stopping the predetermined traveling control and performing the guide line following control when in the guide line detection step, the guide line that is the sub line is detected while the predetermined traveling control is being performed.

### Advantageous Effects of Invention

The present disclosure can provide a conveyance system and a conveyance control method that can improve work efficiency through operation determination based on the state on site, or to provide a conveyance system and a conveyance control method that can improve accuracy of traveling control at a branching point of a guide line.

### Brief Description of Drawings

FIG. 1 is a diagram illustrating an example of an operation area of a conveyance system according to an embodiment of the present invention.
FIG. 2 is a diagram illustrating an example of a configuration of a guided traveling area 110 according to the embodiment.
FIG. 3 is a diagram illustrating an example of a configuration of a guided traveling area 130 according to the embodiment.
FIG. 4 is a perspective view illustrating an example of a hardware configuration of a conveyance vehicle according to the embodiment.
FIG. 5 is a top view illustrating the example of the hardware configuration of the conveyance vehicle according to the embodiment.
FIG. 6 is a bottom view illustrating the example of the hardware configuration of the conveyance vehicle according to the embodiment.
FIG. 7 is a diagram illustrating an example of a hardware configuration when the conveyance vehicle according to the embodiment and a cart towed are coupled.
FIG. 8 is a diagram illustrating another example of the hardware configuration when the conveyance vehicle according to the embodiment and the cart towed are coupled.
FIG. 9 is a diagram illustrating an overall configuration of the conveyance system according to the embodiment.
FIG. 10 is a diagram illustrating an example of a functional configuration diagram of the conveyance vehicle according to the embodiment.
FIG. 11 is a diagram illustrating an example of a series of operation scenarios of the conveyance vehicle according to the embodiment.
FIG. 12 is a diagram illustrating an example of an operation of the conveyance vehicle according to the embodiment at a branching point of a guide line.
FIG. 13 is a flowchart illustrating an example of a control flow for the conveyance vehicle according to the embodiment at the branching point of the guide line.
FIG. 14 is a diagram illustrating an example of an operation of the conveyance vehicle according to the embodiment in a case where a magnetic tape type guide line is used.
FIG. 15 is a diagram illustrating an example of an operation of the conveyance vehicle according to the embodiment in a case where a guide line formed by two-dimensional codes is used.
FIG. 16 is a diagram illustrating an example of an operation of the conveyance vehicle traveling on a main line before branching at a branching point of the guide line formed by the two-dimensional codes.
FIG. 17 is a diagram illustrating an example of an operation of the conveyance vehicle for detecting a sub line after the branching at the branching point of the guide line formed by the two-dimensional codes.
FIG. 18 is a diagram illustrating an example of a configuration of a guided traveling area 110 in a conveyance system according to a second embodiment.
FIG. 19 is a diagram illustrating an example of an operation of the conveyance system according to the second embodiment for determining a stop destination.
FIG. 20 is a flowchart illustrating an example of a control flow performed by the conveyance system according to the second embodiment for determining the stop destination.
FIG. 21 is a diagram illustrating an example of an operation of a conveyance system according to a third embodiment for determining a stop destination.
FIG. 22 is a flowchart illustrating an example of a control flow performed by the conveyance system according to the third embodiment for determining the stop destination.
FIG. 23 is a diagram illustrating an example of another configuration of the guided traveling area 110 in the conveyance system.

### Description of Embodiments

A detailed description is given below on suitable embodiments of the present disclosure with reference to the accompanying drawings. In this specification and the drawings, redundant explanations of components having substantially identical functional configurations are omitted by applying the same symbols.

### [First Embodiment]

In distribution warehouses and manufacturing plants, conveyed objects, such as carts and pallets, are required to be stopped at a predetermined position and in a predetermined orientation in a predetermined manner, to be coordinated with on-site operations. For example, a conveyed object is required to be conveyed to enable an operator to pick up load on the conveyed object without moving. This is done by stopping a cart at a position of coordination with a belt conveyor, or next to an operation position of the operator. A highly accurate conveyance operation is required for the coordination with the belt conveyor and for the stopping next to the operation position of the operator as described above.

A conventional autonomous traveling-basis system (for autonomous traveling while avoiding an obstacle detected by an obstacle detection sensor utilizing laser light or the like) is difficult to achieve highly accurate conveyance operations, and also involves a problem in that a cumbersome procedure is required for introducing a system for stopping at a predetermined position and in a predetermined orientation in a predetermined manner. A guidance-basis system (for traveling along a guide line laid on a traveling road surface) requires the laying of the guide line on the traveling road surface. The laying operation may interfere with on-site operations. Furthermore, the on-site operations may be required to be changed so as not to damage the laid guide line. When a guide line is laid with a magnetic guide line embedded in the road surface, there is a problem in that the traveling route cannot be easily changed.

In view of the above, the following configuration is desirable. Specifically, an area where a highly accurate conveyance operation is required for stopping in a predetermined manner or for coordination with other equipment such as a belt conveyor is defined as a guided traveling area. In this area, a guide line is laid so that the conveyance vehicle can travel under the guidance-basis system. Other areas are defined as autonomous traveling areas in which the conveyance vehicle travels to a designated designation without any guide line, under the autonomous traveling-basis system based on map data acquired in advance.

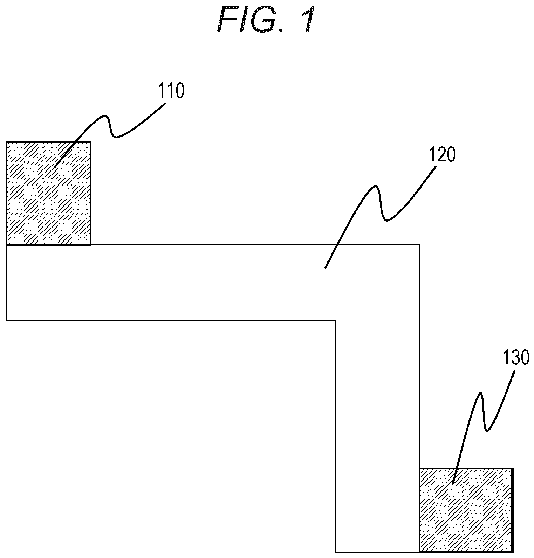

FIG. 1 is a diagram illustrating an operation area of a conveyance system according to an embodiment of the present invention. The operation area of the conveyance vehicle is divided into the guided traveling area and the autonomous traveling area as defined above. Thus, in the operation area of the conveyance system of the illustrated example, improvement in the accuracy of the conveyance control and easy introduction of the conveyance system can both be achieved. In FIG. 1, areas 110 and 130 are defined as guided traveling areas and an area 120 is defined as an autonomous traveling area.

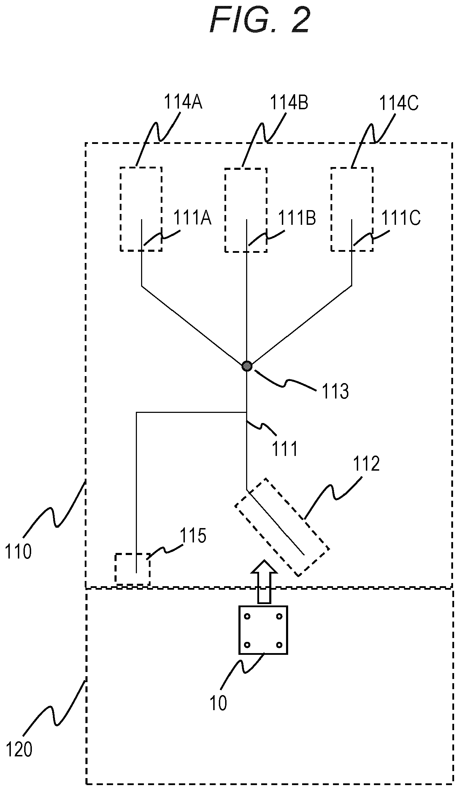

FIG. 2 is a diagram illustrating an example of a configuration of the guided traveling area 110 according to the present embodiment. As illustrated in FIG. 2, in the guided traveling area 110, a guide line 111 is laid, and a guided traveling mode start area 112 where a conveyance vehicle entering the guided traveling area 110 under the autonomous traveling mode detects the guide line and switches to the guided traveling mode, and work areas 114A, 114B, and 114C are defined. A track formed by the guide line 111 is arranged for connection from the guided traveling mode start area 112 to the work areas 114A, 114B, and 114C. The track includes a branching point 113 and post-branching guide lines 111 A, 111B, and 111C respectively leading to the work areas 114A, 114B, and 114C, after the branching. The work areas 114A, 114B, and 114C are, for example, three stop positions for coordination between a belt conveyor and a cart or the like, or three stop positions for an operator to pick up load on the cart. After the work in the work areas 114A, 114B, and 114C ends, the conveyance vehicle moves along the guide line 111 to an autonomous traveling mode start area 115, switches the traveling mode from the guided traveling mode to the autonomous traveling mode in the autonomous traveling mode start area 115, and exits the guided traveling area 110. An operation after the work in the work areas 114A, 114B, and 114C ends may be different from that in the above-described embodiment in which the switching to the autonomous traveling mode occurs in the autonomous traveling mode start area 115. Specifically, the switching to the autonomous traveling mode may occur in the work areas 114A, 114B, and 114C, followed by the exiting from the guided traveling areas 110. Alternatively, the movement to the guided traveling mode start area 112 may occur along the guide line, and the exiting from the guided traveling area 110 may occur with the switching to the autonomous traveling mode occurring in the guided traveling mode start area 112.

The conveyance vehicle traveling under the autonomous traveling mode in the autonomous traveling area 120 enters the guided traveling area 110 illustrated in an upper part of FIG. 2 from the autonomous traveling area 120 illustrated in a lower part of FIG. 2. Thus, the conveyance vehicle travels from the lower side toward the upper side in FIG. 2 and enters the guided traveling mode start area 112. Here, the guide line 111 is laid in the guided traveling mode start area 112, with a predetermined angle or more (20 degree or more for example) with respect to the traveling direction in which the conveyance vehicle travels when entering the guided traveling mode start area 112. The guide line 111 is thus laid with the predetermined angle, so that switching to the guided traveling mode can be more reliably implemented with the guide line in the guided traveling mode start area 112 detected, even when the entering position of the conveyance vehicle varies in the left and right direction in FIG. 2.

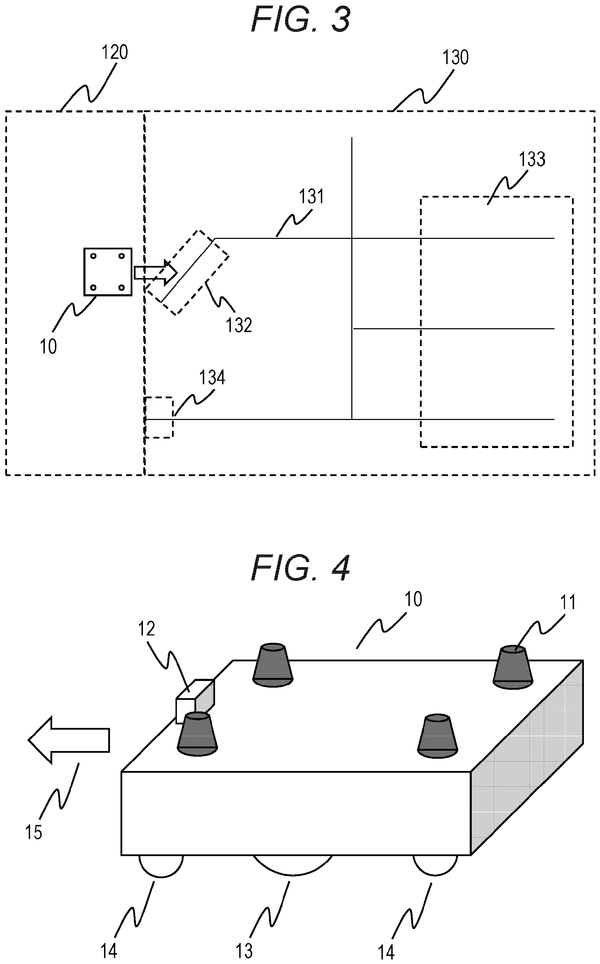

FIG. 3 is a diagram illustrating an example of a configuration of the guided traveling area 130 according to the present embodiment. As illustrated in FIG. 3, in the guided traveling area 130, a guide line 131 is laid, and a guided traveling mode start area 132 where a conveyance vehicle entering the guided traveling area 130 under the autonomous traveling mode detects the guide line 131 and switches to the guided traveling mode, and a work area 133 are defined. The track formed by the guide line 131 is arranged for connection among the guided traveling mode start area 132, the work area 133, and an autonomous traveling mode start area 134 where the guided traveling mode is switched to the autonomous traveling mode, via a plurality of branching points. In the work area 133, a plurality of guide lines are arranged with branching points provided in between, so that a plurality of conveyance vehicles can stop. Like the work areas 114A, 114B, and 114C in the guided traveling area 110, the work area 133 is, for example, a plurality of stop positions for coordination between a belt conveyor and a cart or the like, or a plurality of stop positions for an operator to pick up load on the cart.

The conveyance vehicle 10 traveling under the autonomous traveling mode in the autonomous traveling area 120 enters the guided traveling area 130 illustrated in a right part of FIG. 3 from the autonomous traveling area 120 illustrated in a left part of FIG. 3. In other words, the conveyance vehicle 10 travels from the left side toward the right side in FIG. 3 and enters the guided traveling mode start area 132. Here, the guide line 131 is laid in the guided traveling mode start area 132, with a predetermined angle or more (20 degree or more for example) with respect to the traveling direction in which the conveyance vehicle 10 enters the guided traveling mode start area 132. The guide line 131 is thus laid with the predetermined angle, so that switching to the guided traveling mode can be more reliably implemented with the guide line in the guided traveling mode start area 132 detected, even when the entering position of the conveyance vehicle varies in the upper and lower direction in FIG. 3. Upon detecting the guide line in the guided traveling mode start area 132, the conveyance vehicle travels along the guide line 131 and stops at the work area 133. After the work in the work area 133 ends, the conveyance vehicle moves along the guide line 131 to the autonomous traveling mode start area 134, switches to the autonomous traveling mode in the autonomous traveling mode start area 134, and exits the guided traveling area 130. An operation after the work in the work area 133 ends may be different from that in the embodiment in which the switching to the autonomous traveling mode occurs in the autonomous traveling mode start area 134 as described above. Specifically, exiting from the guided traveling area 130 may occur with the switching to the autonomous traveling mode occurring in the work area 133. Alternatively, the movement to the guided traveling mode start area 132 may occur along the guide line, and the exiting from the guided traveling area 130 may occur with the switching to the autonomous traveling mode occurring in the guided traveling mode start area 132.

As for the guide lines 111 and 131 illustrated in FIGs. 2 and 3, various guidance-basis guide lines conventionally used may be applied. Specifically, for example, an electromagnetic induction system under which the magnetic field generated by a weak alternating current flowing through a metal wire installed as a guide line is detected by a pickup coil on the conveyance vehicle, a magnetic induction system under which a magnetic tape laid on the floor surface as a guide line is read by a magnetic sensor on the conveyance vehicle, and an image recognition system under which an image of a two-dimensional code laid on the floor surface as a guide line is captured by a camera on the conveyance vehicle and image processing is performed on the image, can be applied.

Next, hardware configurations of the conveyance vehicle and a cart towed are described using FIGs. 4 to 8. FIG. 4 is a perspective view illustrating an example of the hardware configuration of the conveyance vehicle according to the present embodiment. An arrow 15 in FIG. 4 indicates the traveling direction of the conveyance vehicle. As illustrated in FIG. 4, the conveyance vehicle includes coupling units 11 for switching between coupled and uncoupled states with a cart, an object position detection unit 12 for detecting the position of an object around the conveyance vehicle, drive wheels 13, and non-drive wheels 14.

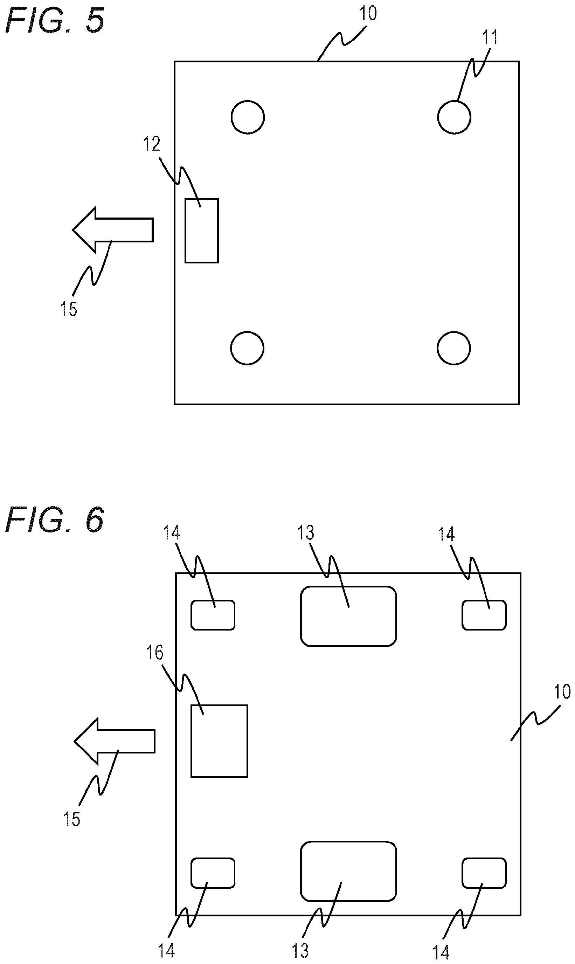

FIG. 5 is a top view illustrating the example of the hardware configuration of the conveyance vehicle according to the present embodiment. FIG. 6 is a bottom view illustrating the example of the hardware configuration of the conveyance vehicle according to the present embodiment. As illustrated in FIG. 5, the coupling units 11 and the object position detection unit 12 are mounted on the top side of the conveyance vehicle. The coupling units 11 are each formed by an actuator, for example, and are configured so that the actuator can be extended upward to be coupled to a coupling receiver (not illustrated) on the cart when coupling to the cart, and retracted to decouple the coupling unit from the coupling receiver on the cart at the time of decoupling. The coupling units 11 are positioned at four locations surrounding the drive wheels 13 of the conveyance vehicle on a plane, and can be coupled to the cart at four locations.

The object position detection unit 12 is a device for detecting the distance from the object position detection unit to an object. As examples of the object position detection unit 12, a laser distance sensor (such as light detection and ranging (LiDAR)) that measures the distance and direction to an object by emitting laser light and measuring the time it takes to hit the object and to be reflected back, a millimeter wave radar that detects the distance to an object based on a millimeter wave transmission signal and a received signal reflected back from the object, a camera-type distance sensor that measures the distance to an object by photographing the object with a camera and analyzing the captured image, or the like may be applied. In the example described in the present embodiment, the object position detection unit 12 is placed in a front part of the top surface part of the conveyance vehicle in the traveling direction, but can alternatively be placed on a front side of the vehicle in the traveling direction. The placement is not limited on the front, and the unit can be placed on a rear side or on both left and right sides relative to the traveling direction.

The object position detection unit 12, which may be configured to detect objects in 360 degrees around the conveyance vehicle, is configured to be capable of detecting an object at least in the traveling direction 15 of the conveyance vehicle.

FIG. 6 is a bottom view illustrating the example of the hardware configuration of the conveyance vehicle according to the present embodiment. On the bottom surface of the conveyance vehicle, the drive wheels 13 are provided at positions on both the left and right sides relative to the traveling direction 15 of the conveyance vehicle, and the non-drive wheels 14 are provided at positions in front of and behind each of the drive wheels 13. The drive wheels 13 are each connected to a rotary shaft of a motor to be driven. The right-side drive wheel and the left-side drive wheel are controlled individually. By controlling the rotation speed and rotation direction of each drive wheel individually, it is possible to make the conveyance vehicle take a curve or change the orientation by rotating at the current location. The non-drive wheels 14 are formed by wheels that are not driven and rotate passively when the conveyance vehicle is being moved using the drive wheels 13. The non-drive wheels 14 each have, for example, a fork that secures the wheel and an axle. The fork is formed by a rotating caster that is rotatably connected to the bottom member of the conveyance vehicle. Therefore, the wheel rotation direction of the non-drive wheels 14 changes passively in response to the traveling direction and rotation operation of the conveyance vehicle. FIG. 6 illustrates the example of the hardware configuration of the conveyance vehicle with two drive wheels and four non-drive wheels at the four corners. Still, the present invention is not limited to this hardware configuration. A four-wheel configuration with two drive wheels and two non-drive wheels may be employed. Also in this four-wheel configuration, it is possible to adopt a configuration in which the front wheels are steerable.

The conveyance vehicle has a bottom surface provided with a guide line detection unit 16 for detecting a guide line. The guide line detection unit 16 is preferably installed more on the forward side than the drive wheels 13 in the traveling direction of the conveyance vehicle. This makes it easier to follow the guide line when traveling at a position where the guide line is curved. Furthermore, when the conveyance vehicle and a cart towed travel, the information can be received from the guide line quickly so that processing such as stopping can be executed quickly. For the guide line detection unit, a sensor corresponding to the type of guidance-basis system as described above is used. For the sensor of the guide line detection unit, a pickup coil is used when the electromagnetic induction system is employed, a magnetic sensor is used when the magnetic induction system is employed, and a camera is used when the image recognition system is employed.

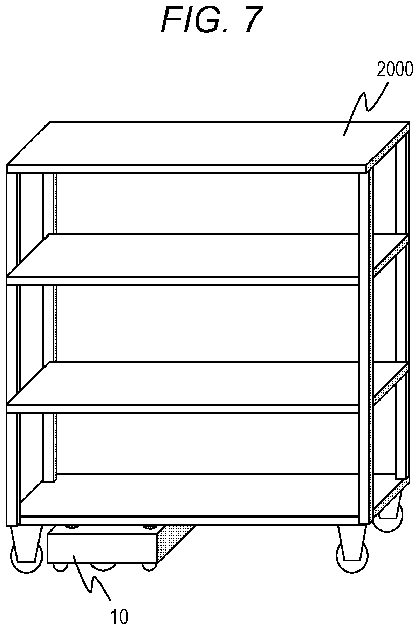

FIG. 7 illustrates an example of the hardware configuration when the conveyance vehicle according to the present embodiment and a cart towed are coupled. Specifically, an example is illustrated where the conveyance vehicle 10 is coupled to the cart while being under the cart, which is the towed target. In this case, mortar-shaped coupling receivers are provided at positions on the bottom surface of the cart, corresponding to the conical-shaped coupling units 11. By extending the coupling units 11 upward, the coupling to the cart can be achieved. By retracting the coupling units 11, the decoupling from the cart can be achieved.

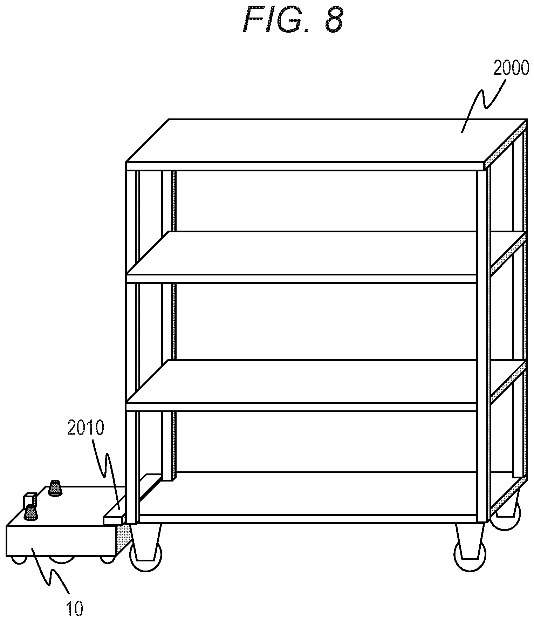

FIG. 8 illustrates another example of the hardware configuration when the conveyance vehicle according to the present embodiment and the cart towed are coupled. The example illustrated in FIG. 8 illustrates an example in which the conveyance vehicle is coupled to a cart 2000 while being positioned beside the cart. The cart includes a coupling receiver 2010 that is coupled to at least some of the coupling units 11 of the conveyance vehicle. By extending the coupling units 11 upward, the coupling to the cart can be achieved. By retracting the coupling units 11, the decoupling from the cart can be achieved. FIGs. 7 and 8 illustrate the example of coupling to and decoupling from the cart by extending and retracting the coupling units 11 each formed by an actuator or the like on the top surface of the conveyance vehicle in the vertical direction. However, the coupling between the conveyance vehicle and the cart is not limited to this and may be achieved in any other ways. The conveyed object to be coupled to the conveyance vehicle is not limited to the cart, and can also be, for example, a pallet, a cabinet, or the like without wheels. When conveying a pallet or a cabinet, the conveyance vehicle is coupled to the pallet or cabinet while being arranged under and lifting up the pallet or cabinet.

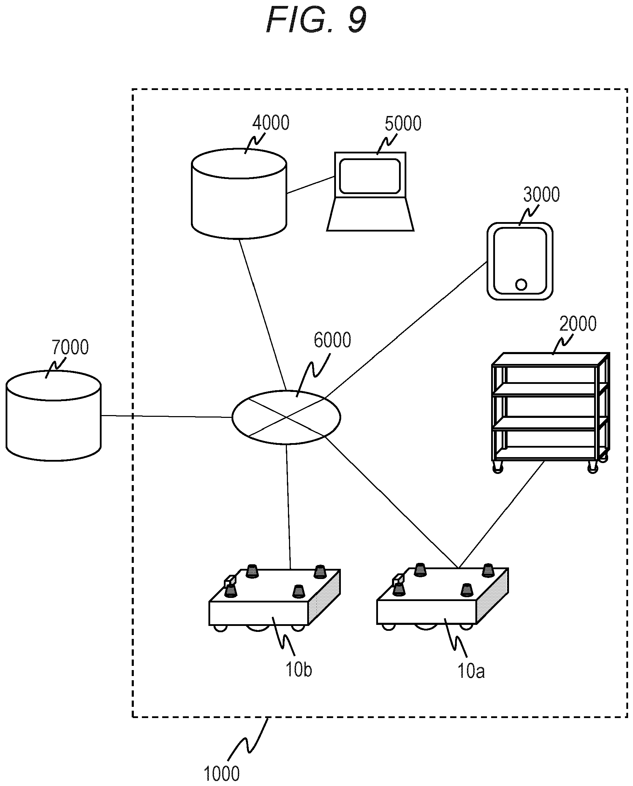

Next, a description is given with reference to a diagram illustrating an overall configuration of the conveyance system according to the present embodiment. FIG. 9 illustrates an example of the overall configuration of the conveyance system. A conveyance system 1000 includes a plurality of conveyance vehicles (10a, 10b), the cart 2000, which is a conveyed object, a maneuvering machine 3000 that can display the state of the conveyance vehicles or input a command to the conveyance vehicles, an operation management device 4000 that manages information necessary for the operation of the conveyance vehicles, an input/output device 5000 that displays information on the operation management device and inputs the information to the operation management device, and a communication network 6000 that communicably connects the plurality of conveyance vehicles (10a, 10b), the maneuvering machine 3000, and the operation management device 4000.

The conveyance system 1000 can also be connected to an external system 7000 via the communication network 6000. When the conveyance system 1000 is introduced to a manufacturing plant to convey parts required for manufacturing from a storage to a production line, the conveyance system 1000 is linked system-to-system with a manufacturing management system as the external system 7000. In this case, if information on the operational progress of the manufacturing operation is acquired from the manufacturing management system, the amount of conveyance by the conveyance vehicles and the conveyance routes can be dynamically adjusted according to the operational progress of the manufacturing operation.

As another example, when the conveyance system 1000 is introduced for logistics run to convey incoming goods from a loading port to a storage when load is brought into a warehouse by truck or the like, and to convey load to be shipped from the storage to a shipping port when the load is shipped from the warehouse, the conveyance system 1000 is linked system-to-system with a logistics management system as the external system 7000. In this case, the conveyance amount and the conveyance routes of the conveyance vehicles can be changed by acquiring information on delivery and shipment from the logistics management system.

Since the plurality of conveyance vehicles (10a, 10b) generally operate at the facility where the conveyance system is introduced, each conveyance vehicle is communicably connected to another conveyance vehicle and other components via the communication network 6000. For example, the conveyance vehicle transmits various types of detection information detected by own detection unit and other control information to the maneuvering machine 3000, the operation management device 4000, and other conveyance vehicles. The conveyance vehicle 10 is communicably connected to the cart 2000 by short-range communication means, and is configured to receive, from the cart, information on the coupling status, cart identification information, and the like.

The maneuvering machine 3000 has the function of displaying the status information of the designated conveyance vehicle and the function of inputting a command to the designated conveyance vehicle. For example, the conveyance vehicle status information displayed on the maneuvering machine includes information on the charge amount of the battery mounted in the conveyance vehicle and serving as a power source for the conveyance vehicle, and identification information of the conveyance vehicle and the cart coupled to the conveyance vehicle. The command to be input to the conveyance vehicle includes, for example, command information about the destination of the conveyance vehicle, commands for operations of coupling to and decoupling from the cart, and commands for starting and stopping the traveling of the conveyance vehicle.

The operation management device 4000 has a status information recording unit 4010 that records status information of a plurality of conveyance vehicles operating in a facility area and an operation scenario management unit 4020 that manages operation scenarios for the plurality of conveyance vehicles. The status information of the conveyance vehicles recorded in the status information recording unit 4010 includes, for example, battery charge information for the plurality of conveyance vehicles operating, identification information of the plurality of conveyance vehicles and the carts coupled, position information of the plurality of conveyance vehicles, operation modes of the plurality of conveyance vehicles (guided traveling mode or autonomous traveling mode), other various types of detection information detected by the detection unit 230 of the conveyance vehicle, and the like. The operation scenarios managed by the operation scenario management unit 4020 include, for example, information on the destination of each of the plurality of conveyance vehicles, the contents of a plurality of operations to be performed until reaching the destination, the operation sequence of the plurality of operations, and a switching condition for the plurality of operations.

The input/output device 5000 can display information recorded in the status information recording unit 4010 of the operation management device 4000 and can add new operation scenarios or update the operation scenarios by inputting operation scenarios managed by the operation scenario management unit 4020. The information to be input to the input/output device 5000 includes, for example, information indicating that the destination of a certain conveyance vehicle is a work area A of the guided traveling area 110, the contents of the operation to enter the guided traveling area 110 and reach the work area A, and a switching condition for a plurality of operations.

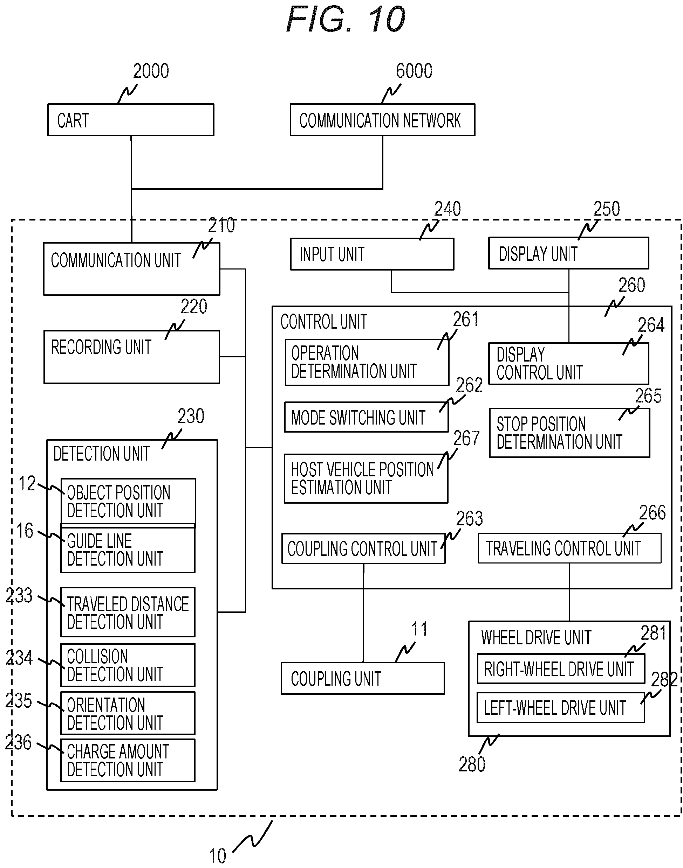

Next, a description is given on functions of the conveyance vehicle using FIG. 10. FIG. 10 is a diagram illustrating a functional configuration of the conveyance vehicle according to the present embodiment. The conveyance vehicle 10 includes a communication unit 210 that communicates with the cart 2000 and the communication network 6000 outside the conveyance vehicle, a recording unit 220, a detection unit 230 including various sensors as described below, the coupling unit 11 for coupling to the cart, a wheel drive unit 280 that drives the wheels, an input unit 240, a display unit 250, and a control unit 260 that controls an operation of the wheel drive unit 280 and the like.

The recording unit 220 has the function of recording information received from the outside by the communication unit 210, detection information detected by the detection unit 230, and control information output from the control unit.

The detection unit 230 includes an object position detection unit 12, a guide line detection unit 232, a traveled distance detection unit 233, a collision detection unit 234, an orientation detection unit 235, and a charge amount detection unit 236. As described above, the object position detection unit 12 may include a laser distance sensor (such as light detection and ranging (LiDAR)) that measures the distance and direction to an object by emitting laser light and measuring the time it takes to hit the object and to be reflected back, a millimeter wave radar that detects the distance to an object based on a millimeter wave transmission signal and a received signal reflected back from the object, a camera-type distance sensor that measures the distance to an object by photographing the object with a camera and analyzing the captured image, or the like.

The guide line detection unit 16 uses sensors according to the type of guidance-basis system as described above. For the sensor of the guide line detection unit, a pickup coil is used when the electromagnetic induction system is employed, a magnetic sensor is used when the magnetic induction system is employed, and a camera is used when the image recognition system is employed. The guide line detection unit detects the guide line when being located directly above the guide line and outputs a detection signal. When an image recognition system is employed under which a camera reads the guide line using a two-dimensional code or a barcode, in addition to the detection signal of the guide line, information on a relative angle between the guide line and the conveyance vehicle can be generated by generating position information based on the information on the code detected and processing the image information of the code.

The traveled distance detection unit 233 detects the number of revolutions of the non-drive wheels 14 or the drive wheels 13 and measures the traveled distance of the conveyance vehicle based on the information on the number of revolutions detected and the diameter (or circumference length) of the non-drive or drive wheels. As an alternative, it is possible to apply a means to detect the traveling speed of the conveyance vehicle using a millimeter wave sensor that irradiates the floor surface with millimeter waves and detects the reflected waves, and estimate the traveled distance by integrating the traveling speed.

The collision detection unit 234 has the function of detecting collision of the conveyance vehicle with an obstacle or person. Specifically, acceleration can be detected by a gyro sensor or the like, and it can be determined that collision has occurred when a sudden change in acceleration is detected. As an alternative, it is possible to install a physical switch together with a bumper in the forward side of the conveyance vehicle in the traveling direction and apply a means to determine that collision has occurred when the physical switch is pressed. When the collision detection unit 234 detects collision, the conveyance vehicle is stopped, at least one of collision occurrence information and the location of the collision is recorded in the recording unit, and the operation management device 4000 and the maneuvering machine 3000 are notified of this information. The orientation detection unit 235 detects the orientation of the host vehicle based on a magnetic compass or on information on the number of revolutions of the left- and right-side drive wheels or steering information of the wheels.

The charge amount detection unit 236 detects the charge amount of the battery, which is a power source for the conveyance vehicle. When the charge amount detected by the charge amount detection unit 236 is a predetermined value or less, charging is determined to be required, the detection information indicating the low charge amount is recorded in the recording unit, and the operation management device 4000 and the maneuvering machine 3000 are notified of this information. Furthermore, when the charge amount is detected to be the predetermined value or less, the vehicle may automatically move to a charging spot for charging, in addition to the above process. The aforementioned predetermined value for the charge amount detection unit 236 to determine that charging is required may be a value preset based on at least one of the distance to the destination set for the conveyance vehicle and the weight of the conveyed object coupled to the conveyance vehicle.

The input unit 240 is formed by a physical switch, a touch panel, or the like mounted on the conveyance vehicle, which allows the user to directly input operation commands and other types of information into the conveyance vehicle. The display unit 250 is formed by a liquid crystal panel or the like mounted on the conveyance vehicle and displays the status information of the conveyance vehicle (such as various types of detection information detected by the detection unit 230, and currently running operation scenarios).

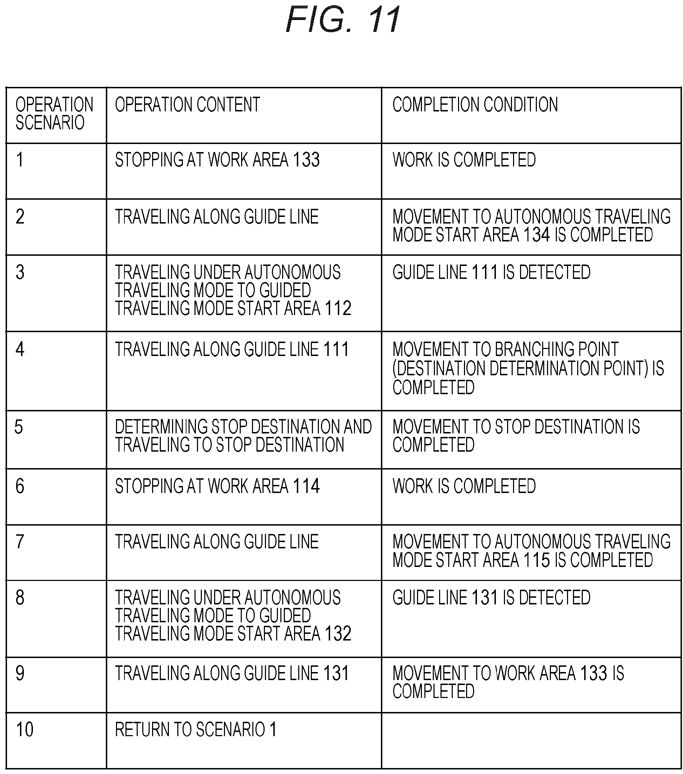

The control unit 260 includes an operation determination unit 261, a mode switching unit 262, a coupling control unit 263, a display control unit 264, a stop position determination unit 265, a traveling control unit 266, and a host vehicle position estimation unit 267. The operation determination unit 261 determines the operation of the conveyance vehicle based on the operation scenario of the host conveyance vehicle acquired from the operation scenario management unit 4020. Examples of the operation scenarios are described below using FIG. 11.

The mode switching unit 262 performs mode switching between the guided traveling mode and the autonomous traveling mode for the conveyance vehicle based on a predetermined condition in the operation scenario or the command input using the input unit 240. The coupling control unit 263 controls the operation of the coupling units 11 for coupling to/decoupling from the cart or other conveyed objects based on the predetermined condition in the operation scenario or the command input using the input unit 240. The display control unit 264 controls the aforementioned input unit 240 and display unit 250.

The stop position determination unit 265 executes processing to determine the stop position of the host vehicle based on the position information of the object detected by the object position detection unit 12 when the host machine arrives at the position that is preset as the position where the stop position determination is to be performed. In the present embodiment, a description is given on the stop position determination in a case where the guide line branches into a plurality of lines so that a plurality of destination work areas 114 can be set. In this case, map information including the position information of each of the work areas 114A, 114B, and 114C is stored in the storage unit 220, and it is determined whether the position of the detected object matches the position of any of the respective work areas 114A, 114B, and 114C in the map information. The work area where the object is detected is not determined to be the stop destination position. One of the work areas in which no object is detected is determined to be the stop destination position. The object position detection unit 12 can detect the distance and direction to the object from the conveyance vehicle. Since the guide line detection unit acquires information on the position and orientation of the conveyance vehicle, based on this information, it is possible to determine whether the position of the detected object matches the position of any of the work areas 114A, 114B, and 114C in the map information.

The traveling control unit 266 controls the traveling of the conveyance vehicle based on information on determination by at least one of the operation determination unit 261, the mode switching unit 262, and the stop position determination unit 265. Specifically, a right-wheel drive unit 281 and a left-wheel drive unit 282 of the wheel drive unit 280 are controlled individually. The right-wheel drive unit 281 and the left-wheel drive unit 282 are formed of motors, for example. Controlling the rotation speed and rotation direction of each of the drive wheels individually can make the conveyance vehicle take a curve at a desired trajectory radius while traveling or rotate to change orientations. The host vehicle position estimation unit 267 estimates the position of the host vehicle over the entire traveling area based on the traveled distance detected by the traveled distance detection unit 233, information on the orientation of the host vehicle detected by the orientation detection unit 235, and the map information of the entire area recorded in the recording unit 220. Alternatively, it is possible to estimate the position of the host vehicle over the entire traveling area based on information on the distance and direction to an object measured by the object position detection unit 12 and the map information of the entire area recorded in the recording unit 220. Alternatively, if the vehicle is traveling on a guide line formed by two-dimensional codes, it is possible to estimate the position of the host vehicle over the entire traveling area based on the identification information of the two-dimensional codes and the map information as described above.

Next, a description will be given on an example of the operation scenarios in which the conveyance system is introduced to a facility. FIG. 11 illustrates an example of a series of operation scenarios of the conveyance vehicle according to the present embodiment. Specifically, a series of operation scenarios from starting in the work area 133 to returning to the work area 133 is illustrated. The information on the operation scenarios is received from the operation management device 4000 and recorded in the recording unit 220.

A series of operations by the conveyance system includes a plurality of operation scenarios as illustrated in FIG. 11. These operation scenarios are input by the user using the input/output device 5000 and stored in a memory device in the operation management device 4000. Each operation scenario has a predefined completion condition for the operation, and if the completion condition is satisfied based on information detected by the detection unit of the conveyance vehicle and the like, the next operation scenario is executed. The operation content of Scenario 1 is stopping at the work area 133, and the completion condition is satisfied when the work performed in that work area is completed. The work performed in the work area includes, for example, the transfer of load on the cart by an operator and the replacement of the cart coupled to the conveyance vehicle. The content of the next operation performed in Scenario 2 is traveling along the guide line 131, and the completion condition is satisfied when the movement to the autonomous traveling mode start area 134 is completed. The completion of the movement to the autonomous traveling mode start area 134 can be detected by means of receiving position information from a proximity communication device installed in the autonomous traveling mode start area 134, or by reading a two-dimensional code including unique ID information and forming the guide line.

The content of the operation in Scenario 3 is traveling under the autonomous traveling mode to the guided traveling mode start area 112. Based on the map information of the entire area (including the guided traveling area and autonomous traveling area) in which the conveyance vehicle travels and the host vehicle position information estimated by the host vehicle position estimation unit that are recorded in the recording unit 220, the vehicle travels without deviating from the autonomous traveling area included in that map information. When the object position detection unit detects an object, the vehicle travels to the guided traveling mode start area 112 along a route circumventing the object. The completion condition is satisfied when the guide line 111 is detected.

The content of the operation in Scenario 4 is traveling along the guide line 111, and the completion condition is satisfied when the movement to a branching point, which is a destination determination point, is completed. The content of the operation in Scenario 5 is determining the stop destination and traveling to the stop destination, and the completion condition is satisfied when the movement to the stop destination is completed. The content of the operation in Scenario 6 is remaining stopped at the work area 114, which is the stop destination, and the completion condition is satisfied when the work by the operator is completed. The completion of the work can be detected when, for example, the operator presses a work completion button, which is also provided on the maneuvering machine 3000 or the input unit 240. The content of the operation in Scenario 7 is traveling along the guide line, and the completion condition is satisfied when the movement to the autonomous traveling mode start area 115 is completed. The content of the operation in Scenario 8 is traveling under the autonomous traveling mode to the guided traveling mode start area 132. The traveling control under the autonomous traveling mode is the same as that in Scenario 3 above. The completion condition is satisfied when the guide line 131 is detected. The content of the operation in Scenario 9 is traveling along the guide line 131, and the completion condition is satisfied when the movement to the work area 133 is completed. The operation returns to Scenario 1 when the operation in Scenario 9 is completed.

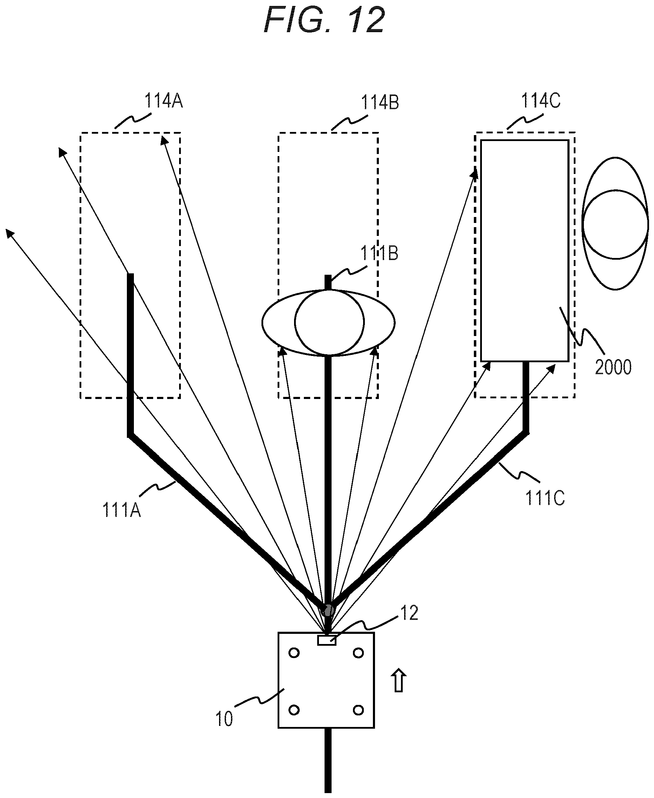

Next, a description is given on an operation of the conveyance vehicle 10 for determining the stop destination at the branching point of the guide line, with reference to FIG. 12. In particular, a description is given with reference to FIG. 12 on how the stop destination is determined in a case where a candidate position of the stop destination is in each branch. A conveyance vehicle traveling along the guide line 111 in the guided traveling area 110 executes a process to determine the stop destination when it arrives at a stop destination determination point (in this example, a branching point). The conveyance vehicle may be detected to have arrived at the destination determination point, with a mark triggering the stop destination determination processing provided next to the guide line. Alternatively, the guide line may be formed by two-dimensional codes with unique identification information, and when a two-dimensional code corresponding to the stop destination determination point is detected, it may be determined that the conveyance vehicle has arrived at the stop destination determination point.

Upon arriving at the stop destination determination point, the object position detection unit detects a position of an object in the vicinity of the conveyance vehicle. Here, the position information of each of the work areas 114A, 114B, and 114C, which are candidate positions for the stop destination, is recorded in the recording unit 220. By comparing the position of the detected object with the position of each work area, the work area including the object and the work area not including the object are determined. In the example illustrated in FIG. 12, the operator is in the center work area 114B and another cart is parked in the right side work area 114C. Thus, the conveyance vehicle 10 determines that there is an object in the work areas 114B and 114C, and determines the left side work area 114A, where no objects are detected, as the stop destination. Once the stop destination is determined, the conveyance vehicle travels on a branch proceeding toward that stop destination (work area 114A) and stops upon arriving at the stop destination.

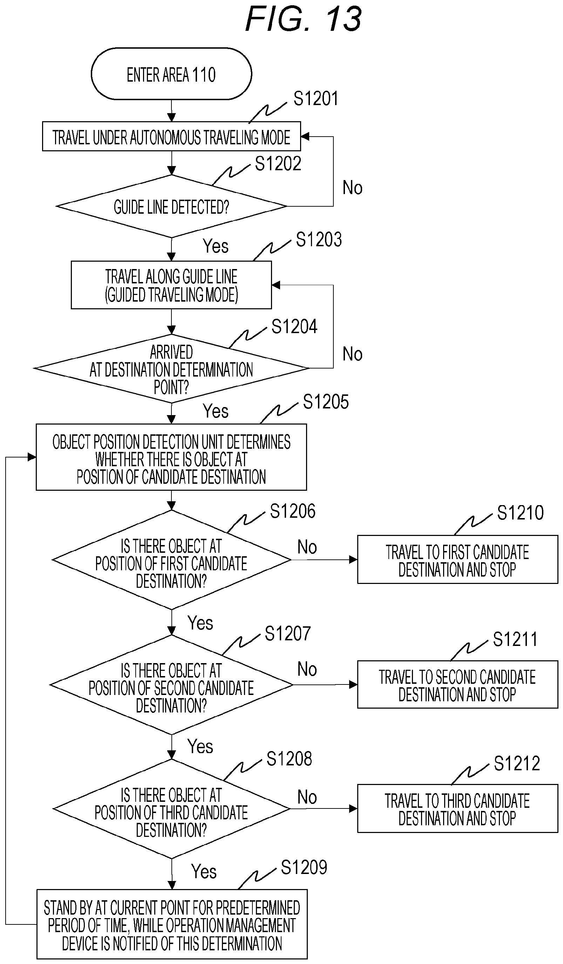

Next, the control flow from the entering of the conveyance vehicle 10 into the guided traveling area 110 until the conveyance vehicle stops at the stop destination will be described with reference to FIG. 13. In step 1201, when the conveyance vehicle traveling in the autonomous traveling area 120 enters the guided traveling area 110, the conveyance vehicle first continues to travel under the autonomous traveling mode (S1201). Next, in step 1202, whether the guide line 111 is detected is determined. When the guide line 111 is not detected, the processing returns to S1201 to continue driving in the autonomous traveling mode (S1202). In other words, the vehicle continues to travel under the autonomous traveling mode until the guide line 111 is detected. When the guide line is detected, the processing proceeds to step 1203 (S1203). In S1203, the conveyance vehicle travels along the guide line 111. Here, the conveyance vehicle traveling in the autonomous traveling area 120 may switch the mode from the autonomous traveling mode to the guided traveling mode upon entering the guided traveling area 110, and perform linear traveling until the guide line is detected as the operation under the guided traveling mode in S1201.

Next, in step 1204, whether the conveyance vehicle has arrived at the destination determination point is determined. When the conveyance vehicle has not arrived at the point yet, the processing returns to S1203 and the traveling along the guide line continues (S1204). The destination determination point can be set at any location. When the work areas, which are each a destination, are located on branches from the guide line as illustrated in FIG. 12, the destination determination point is preferably defined at a point before the branching point of the guide line. Detection of arrival at the destination determination point may be achieved by detecting a mark provided next to the guide line to trigger the stop destination determination processing as described above, or by detecting a predetermined traveled distance traveled along the guide line from a predetermined point before the branching point, through traveled distance detection. Alternatively, when the guide line is formed by two-dimensional codes with unique identification information, the detection may be achieved by detecting a two-dimensional code that triggers the stop destination determination processing. Alternatively, the detection may be achieved by detecting a plurality of two-dimensional codes at once, with the guide line branched.

Next, in step 1205 (S1205), the object position detection unit determines whether there is an object at the position of the candidate destination. The object position detection unit may detect the distance to the object, using any of a laser distance sensor (such as light detection and ranging (LiDAR)), millimeter wave radar that detects the distance to an object based on the millimeter wave transmission signal and the received signal reflected back from the object, a camera-type distance sensor that measures the distance to an object by photographing the object with a camera and analyzing the captured image, or the like.

Next, in step 1206, whether there is an object at the position of a first candidate destination is determined (the work area 114C for example) (S1206). When there is an object, the processing proceeds to step 1207 (S1207). When there is no object, the processing proceeds to step 1210 (S1210), where the conveyance vehicle travels to the position of the first candidate destination and stops. Next, in step 1207, whether there is an object at the position of a second candidate destination is determined (the work area 114B for example) (S1207). When there is an object, the processing proceeds to step 1208 (S1208). When there is no object, the processing proceeds to step 1211 (S1211), where the conveyance vehicle travels to the position of the second candidate destination and stops. Next, in step 1208, whether there is an object at the position of a third candidate destination is similarly determined (the work area 114A for example) (S1208). When there is an object, the processing proceeds to step 1209 (S1209). When there is no object, the processing proceeds to step 1212 (S1212), where the conveyance vehicle travels to the position of the third candidate destination and stops. Before arriving at the stop area in step 1210 (S1210), step 1211 (S1211), and step 1212 (S1212), the information on the work area, which is the destination position determined to be the stop destination may be transmitted to the display unit 250 of the conveyance vehicle, the maneuvering machine 3000, and the operation management device 4000, and may be output from each of these device in audio or display.

In the example above, the control flow is performed in the case where there are three stop destination candidate positions, which are the work areas 114A to 114C, and thus is provided with the three determination steps in S1206 to S1208. When there are five stop destination candidate positions, the number of control steps is also set to five. Next, in step 1209, when it is determined that there is an object at all the stop destination candidate positions, the operation management device 4000 is notified of this information, and the conveyance vehicle stands by at the current point for a predetermined period of time (S1209). When the predetermined standby period of time elapses, the processing returns to step 1205 (S1205), where whether there is an object is determined again.

In the example described above, the priority for the stop destinations (first to third candidates) is set in the order of the work areas 114C, 114B, and 114A, but the priority can be set in any way.

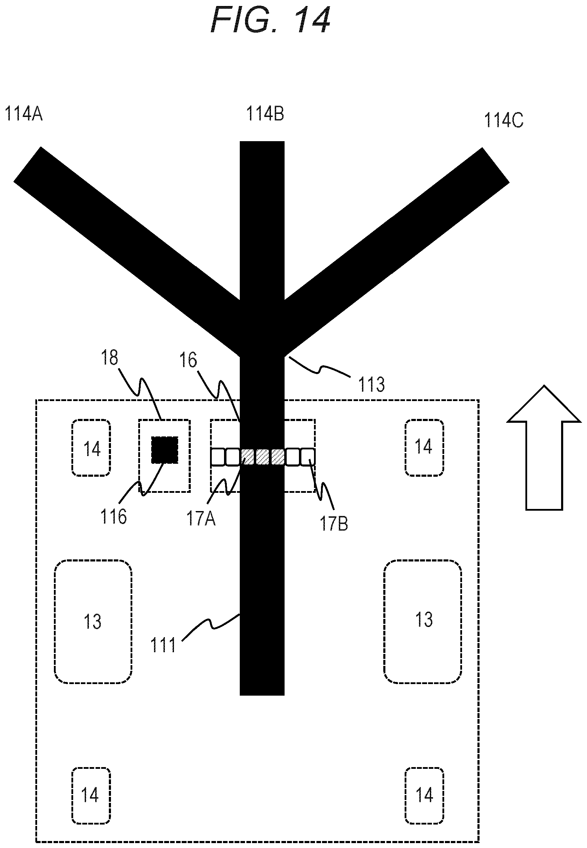

Next, a specific example of a branching point 113 formed by the guide line 111 and a specific example of traveling to a desired route based on the stop destination determination described above from the branching point 113 will be described below with reference to FIGs. 14 to 17. FIG. 14 illustrates an example where a magnetic tape is laid on the floor surface as the guide line. The route of the conveyance vehicle, formed by the guide line 111, is divided into three routes at the branching point 113, and the routes after the branching point form respective routes to the work areas 114A, 114B, and 114C.

A plurality of magnetic sensors 17 are arranged side by side in the left and right direction of the conveyance vehicle traveling on the guide line 111, to form the guide line detection unit 16. In the example illustrated in FIG. 14, seven magnetic sensors 17 are arranged side by side in the left and right direction. The three magnetic sensors 17A in the center, illustrated be hatched, are sensors that are detecting the magnetic tape, while the two magnetic sensors 17B each on the left and right are sensors that are not detecting the magnetic tape. During the traveling on the guide tape that is not a branch, the traveling control unit controls the rotation speed of the right wheel driving unit 281 and the left wheel driving unit 282 based on the detection result of the magnetic sensors, to make the magnetic sensors disposed at the center of the guide line detection unit 16 detect the magnetic tape. For example, when the magnetic sensor detecting the magnetic tape is on the right side rather than the center of the guide line detection unit 16, the rotation speed of the right-side drive wheel is set to be relatively higher than that of the left-side drive wheel. When the magnetic sensor detecting the magnetic tape is on the left side rather than the center of the guide line detection unit 16, the rotation speed of the left-side drive wheel is set to be relatively higher than that of the right-side drive wheel. Thus, the conveyance vehicle can be controlled so as to travel stably on the guide line.

A guide mark 116 for issuing an instruction of control information to the conveyance vehicle is laid on the floor surface to be on the side of the guide line and before the branching point. The conveyance vehicle further includes a mark detection unit 18 for detecting the guide mark 116. The mark detection unit 18 receives triggering information for the stop destination determination from the guide mark 116.

When the work area 114A on the upper left side in FIG. 14 is determined to be the stop destination as a result of the stop destination determination, detection by the two magnetic sensors 17B on the right side in the guide line detection unit 16 is stopped, performed with reduced sensitivity, performed with a weight taken into consideration for the control reduced, or the like for example, to travel into the left side route from the branching point. Thus, the conveyance vehicle can travel into the left side route.

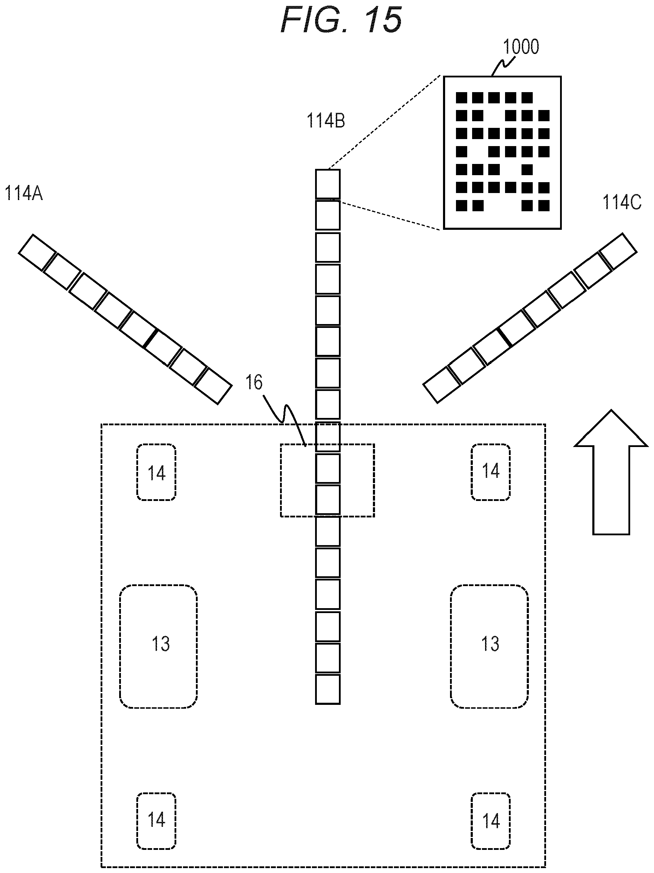

FIGs. 15 to 17 illustrate an example where a plurality of two-dimensional codes are laid on the floor surface along the route direction as the guide line. Bar codes can be used instead of the two-dimensional code. The route of the conveyance vehicle, formed by the guide line 111, is divided into three routes at the branching point 113, and the routes after the branching point form respective routes to the work areas 114A, 114B, and 114C.

As illustrated in FIG. 15, a two-dimensional code 1000 includes a plurality of points printed on a two-dimensional plane. The two-dimensional codes forming the guide line are each a unique code. The guide line detection unit 16 of the conveyance vehicle traveling on the guide line 111 includes a camera. Thus, the two-dimensional codes are recognized using the camera. The guide line detection unit 16 acquires code information, from the detected two-dimensional codes, including at least one of identification information unique to each two-dimensional code and position information, and also acquires information on the relative angle between the two-dimensional code and the conveyance vehicle. While the two-dimensional codes are used in this example, bar codes may be used instead of the two-dimensional codes, or both two-dimensional codes and bar codes may be used.

Based on the identification information of the two-dimensional codes, the position information, and the relative angle information, the traveling control unit controls the traveling of the conveyance vehicle by controlling the rotation speed of each of the left- and right-side drive wheels to make the two-dimensional codes fall within the image capturing range of the camera so that the two-dimensional codes can be detected continuously.

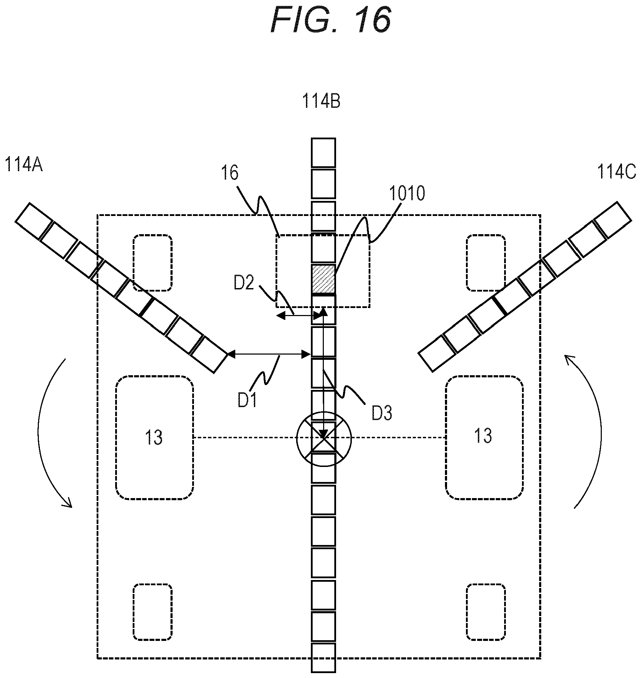

When the guide line detection unit detects the guide line 1010, the identification information of the guide line 1010 or the position information triggers the stop destination determination. Thus, the conveyance vehicle stops, and the stop destination determination processing is executed. Here, unlike the guide line using the magnetic markers as illustrated in FIG. 14, the guide lines illustrated in FIGs. 15 to 17 are laid at a distance from each other. Thus, branched guide lines do not overlap each other at the branching point. As illustrated in FIG. 16, the shortest distance D1 between the main line of the guide line before branching and the sub line after branching is, for example, about 7 to 15 cm. The guide line detection unit 16 of the conveyance vehicle traveling on the guide line 111 is configured with a distance D2 from the center to the edge of the image capturing range on the floor surface in the left and right direction of the vehicle body being shorter than the distance D1, and being for example, about 6 cm. Since the distance D2 is shorter than the distance D1 as described above, the guide line detection unit 16 of the conveyance vehicle can detect the two-dimensional codes of the main line without detecting the two-dimensional codes of the sub line of the guide line. There is a problem in that when the two-dimensional codes of the main line and the sub line are detected at the same time, which two-dimensional code should be used for control cannot be determined.

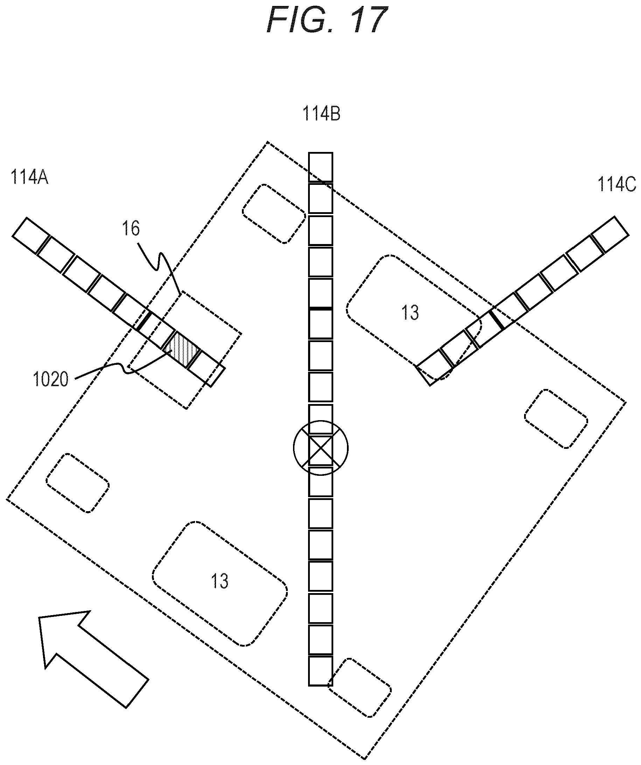

After completing the stop destination determination, the control unit of the conveyance vehicle performs branching control to move to the determined stop destination. For example, when the work area 114A is determined to be the stop destination as a result of the stop destination determination, the host vehicle is rotated in the predetermined rotation direction that is recorded in advance in the recording unit 220 in association with the work area 114A. In other words, to travel into the left-side sub line leading to the work area 114A, the right-side drive wheel is rotated in the traveling direction and the left-side drive wheel is rotated in the opposite direction. Thus, the conveyance vehicle performs an operation of rotating counterclockwise. As illustrated in FIG. 17, when a two-dimensional code 1020 of the sub line is detected by the image capturing range of the guide line detection unit 16 moved by the rotation operation, the rotation operation stops, and the conveyance vehicle travels linearly along the guide line that is the sub line. Here, the condition for stopping the rotation operation, which is preset in the recording unit 220, may be the detection of a certain two-dimensional code 1020, but is not limited to this and may be detection of any two-dimensional code in the guide line that is the sub line, or detection of any two-dimensional code. A scenario of the branching operation described above (predetermined rotation direction, the condition for stopping the rotation operation, and operation after stopping the rotation operation) is information that is recorded in the recording unit 220 in advance in association with the determined stop destination, and the user can set the information on the predetermined rotation direction information when setting the scenario using the input/output device 5000 or the like.

Here, a distance D3 between the rotation center of the conveyance vehicle illustrated in FIG. 16, that is, the midpoint between the left-side drive wheel and the right-side drive wheel, and the image capturing range of the guide line detection unit 16 is longer than the distance D1. Thus, through the rotation operation of the conveyance vehicle, the two-dimensional codes of the sub line after branching can be detected with a higher reliability. The distance D3 is, for example, about 15 to 20 cm. As illustrated in FIG. 17, the rotation operation of the conveyance vehicle is preferably performed with the rotation center of the conveyance vehicle matching the position where the extension of the sub line and the main line intersect. This is because when the conveyance vehicle detects the guide line that is the sub line after the branching, the guide line and the conveyance vehicle are parallel with the relative angle therebetween being substantially zero, meaning that the traveling control after the branching is stabilized. On the other hand, the rotation operation of the conveyance vehicle may be performed with the rotation center of the conveyance vehicle matching the position where the distance between the main line and the sub line is the shortest. In this case, the image capturing range of the guide line detection unit 16 moves to a position where two-dimensional codes of the sub line are more easily detected.

### [Second Embodiment]

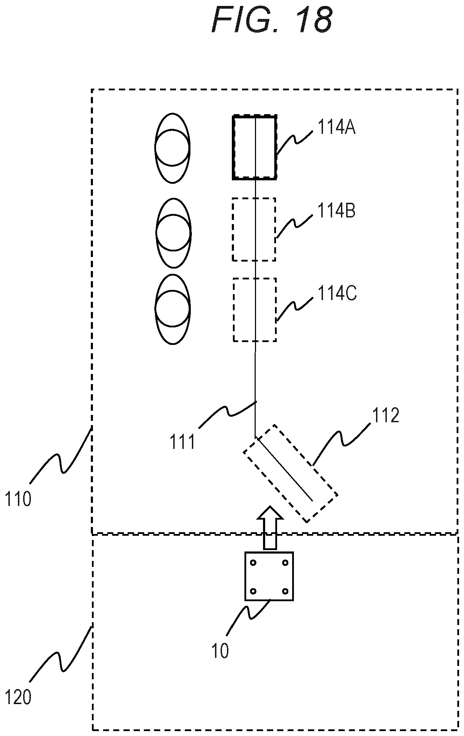

While the case where the route to the stop destination branches from the branching point is described in the above embodiment, in a second embodiment, an operation of a conveyance vehicle performed when a plurality of stop destinations (work areas 114A, 114B, 114C) are defined on the same route is described with reference to FIGs. 18 to 20. In the present embodiment, parts different from the first embodiment described above are described, and the parts not mentioned shall be regarded as being the same as in the first embodiment.

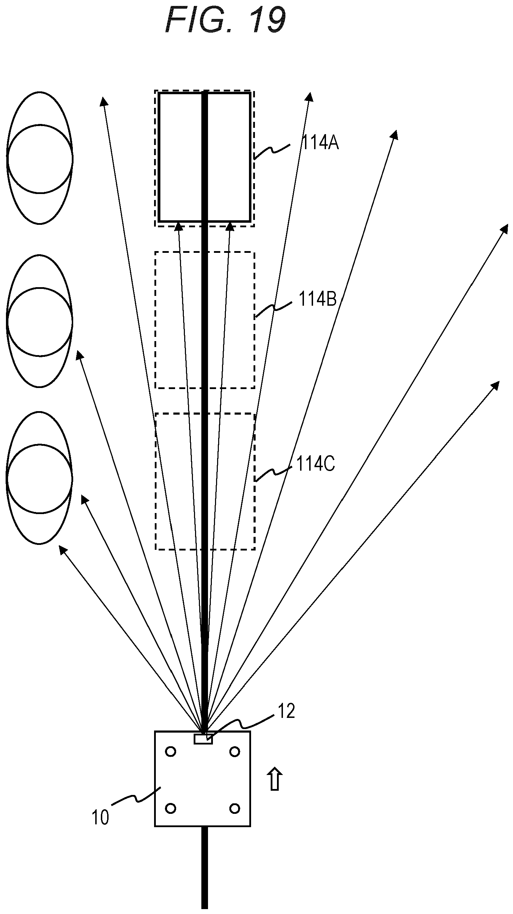

As illustrated in FIG. 18, the work areas 114A, 114B, and 114C, which are stop destinations, are defined on the same route of the conveyance vehicle and are defined as the work areas 114A, 114B, and 114C in this order from the far side in the traveling direction. When the conveyance vehicle acquires the information triggering the stop destination determination, the object position detection unit 12 determines whether there is an object in each work area ahead on the route. FIG. 19 illustrates an example where the preceding cart is parked in the work area 114A on the far side of the path. In this situation, in the conveyance vehicle 10, the object position detection unit 12 determines that there is an object in the work area 114A and that there are no objects in the work areas 114B and 114C ahead. Therefore, the work area 114B including no objects and is the farthest work area in the traveling direction is determined to be the stop destination.

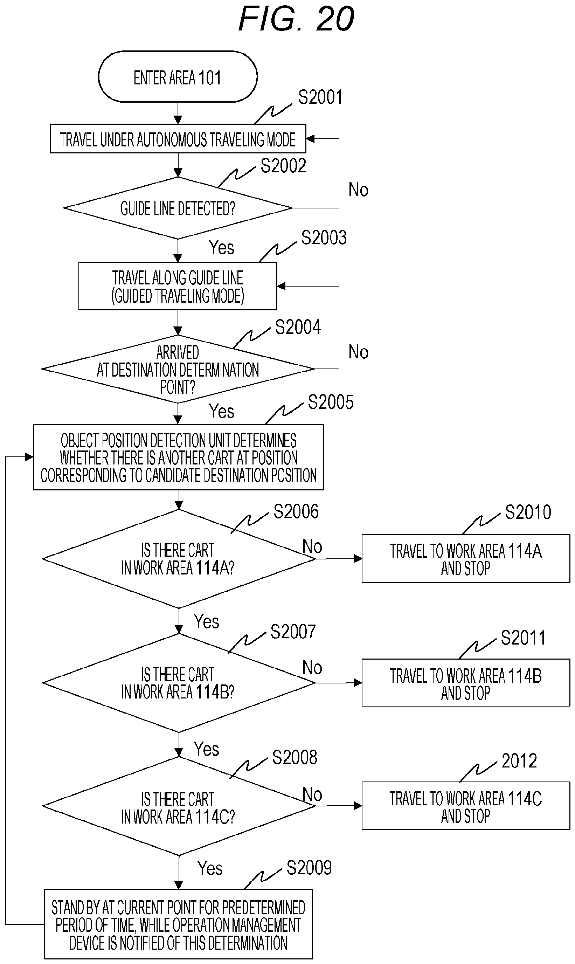

FIG. 20 illustrates the control flow for the above determination. In FIG. 20, S2001 to S2005 are similar to S1201 to S1205 in FIG. 13, and thus the description thereof is omitted. After the object position detection unit 12 determines whether there is an object at the position of the candidate destination in step 2005 (S2005), whether there is an object such as a cart in the work area 114A is determined in step 2006 (S2006). When there is no object, the work area 114A is determined to be the stop destination, and the processing proceeds to step 2010 (S2010) where the conveyance vehicle travels to and stops at the work area 114A. When there is an object, the processing proceeds to the determination processing in step 2007 (S2007). Next, whether there is an object such as a cart in the work area 114B is determined (S2007). When there is no object, the work area 114B is determined to be the stop destination and the processing proceeds to step 2011 (S2011), where the conveyance vehicle travels to and stops at the work area 114B. When there is an object, the processing proceeds to the determination processing in step 2008 (S2008). Then, similarly, whether there is an object such as a cart in the work area 114C is determined in step 2008 (S2008). When there is no object, the work area 114C is determined to be the stop destination, and the processing proceeds to step 2012 (S2012), where the conveyance vehicle travels to and stops at the work area 114C. Before arriving at the stop area in step 2010 (S2010), step 2011 (S2011), and step 2012 (S2012), the information on the work area that is the stop destination may be output to the display unit 250 of the conveyance vehicle, the maneuvering machine 3000, and the operation management device 4000.

In the example above, the control flow is performed in the case where there are three stop destination candidate positions, which are the work areas 114A to 114C, and thus is provided with the three determination steps in S2006 to S2008. When there are five stop destination candidate positions, the number of control steps is also set to five. Next, in step 2009, when it is determined that there is an object at all the stop destination candidate positions, the operation management device 4000 is notified of this information, and the conveyance vehicle stands by at the current point for a predetermined period of time (S2009). When the predetermined standby period of time elapses, the processing returns to step 2005 (S2005), where whether there is an object is determined again.

### [Third Embodiment]

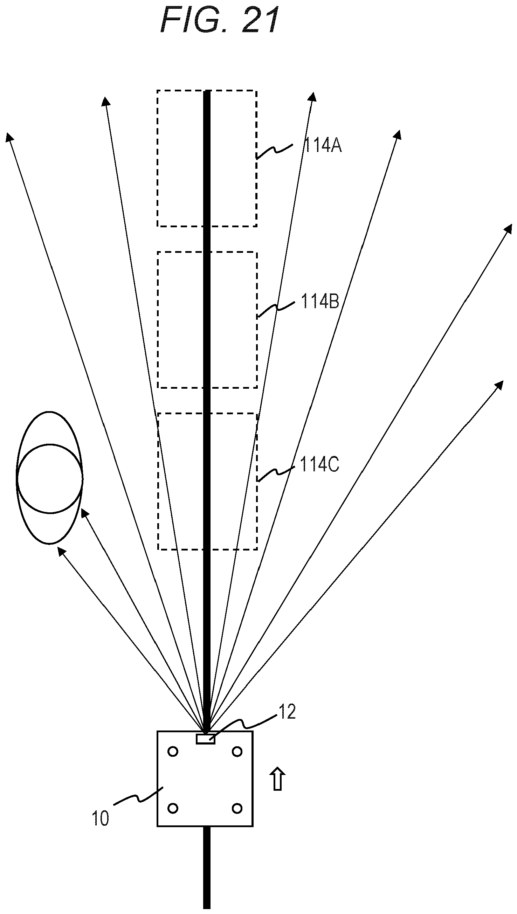

The above second embodiment is described as an embodiment in which the stop destination is determined based on the detected position of a cart or the like ahead. In a third embodiment, a description is given with reference to FIGs. 21 to 24 on an operation of a conveyance vehicle performed for determining the stop destination based on the presence or absence of an operator. In the present embodiment, parts different from the second embodiment described above is described, and the parts not mentioned shall be regarded as being the same as in the second embodiment.

As illustrated in FIG. 21, the work areas 114A, 114B, and 114C, which are stop destinations, are defined on the same route of the conveyance vehicle and are defined as the work areas 114A, 114B, and 114C in this order from the far side in the traveling direction. When the conveyance vehicle acquires the information triggering the stop destination determination, the object position detection unit 12 determines whether there is an object in each work area ahead on the route. FIG. 21 illustrates an example where an operator is at a position corresponding to the work area 114C on the closer side of the path. In this situation, in the conveyance vehicle 10, the object position detection unit 12 determines that an operator is present at a position corresponding to the work area 114C and is next to the work area 114C, and that there are no objects in the work area 114C. The work area 114C is determined to be the stop destination as a result of the stop destination determination, and the conveyance vehicle travels to and stops at the work area 114C.

While the stop destination is determined based on whether there is an object in a work area on the path of the conveyance vehicle in the example described in each of the embodiments described above, in this third embodiment, the stop position is changed based on the work location of the operator when the operator picks up or sorts the conveyed object in the work area, so that the operator and the conveyance vehicle can collaborate, whereby work efficiency can be improved.

While a method of recognizing an operator by processing information acquired by a laser distance sensor or a camera is preferably performed for the detection of an operator, the presence of an operator may also be determined simply by detecting an object at a predetermined operator position.

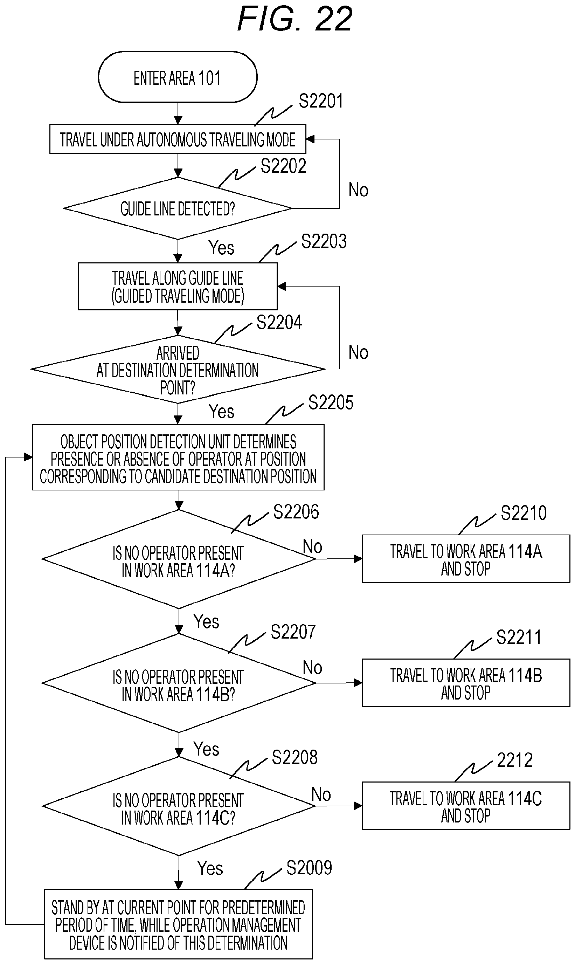

FIG. 22 illustrates the control flow of the third embodiment described above. In FIG. 22, S2201 to S2205 are similar to S1201 to S1205 in FIG. 13, and thus the description thereof is omitted. After the object position detection unit 12 determines the presence or absence of an operator at a position corresponding and next to the candidate destination position in step 2205 (S2205), whether an operator is present at a position corresponding to the work area 114A is determined in step 2206 (S2206). When an operator is present, the work area 114A is determined to be the stop destination, and the processing proceeds to step 2210 (S2210) where the conveyance vehicle travels to and stops at the work area 114A. When no operator is present, the processing proceeds to step 2207 (S2207) where the determination processing is executed. Next, whether an operator is present at a position corresponding to the work area 114B is determined in step 2207 (S2207). When an operator is present, the work area 114B is determined to be the stop destination and the processing proceeds to step 2211 (S2211), where the conveyance vehicle travels to and stops at the work area 114B. When no operator is present, the processing proceeds to step 2208 (S2208) where the determination processing is executed. Next, similarly, whether an operator is present at a position corresponding to the work area 114C is determined in step 2208 (S2208). When an operator is present, the work area 114C is determined to be the stop destination and the processing proceeds to step 2212 (S2212), where the conveyance vehicle travels to and stops at the work area 114C. When there is no operator, the processing proceeds to step 2209 (S2209). Before arriving at the stop area in step 2210 (S2210), step 2211 (S2211), and step 2212 (S2212), the information on the work area that is the stop destination may be output to the display unit 250 of the conveyance vehicle, the maneuvering machine 3000, and the operation management device 4000.

While an example is described where the stop destination is determined depending on the presence of an operator in each of steps S2206, S2207, and S2208, as described above, the stop destination may be selected when there is no object in a work area in addition to the presence of the operator at the position corresponding to the work area. In the example above, the control flow is performed in the case where there are three stop destination candidate positions, which are the work areas 114A to 114C, and thus is provided with the three determination steps in S2006 to S2008. When there are five stop destination candidate positions, the number of control steps is also set to five.

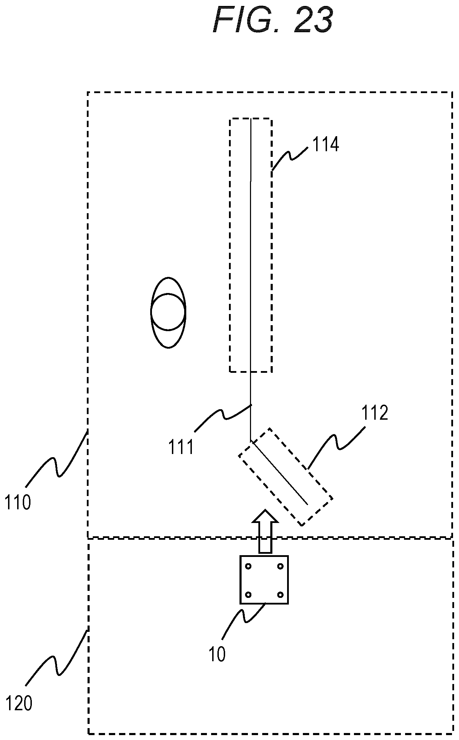

While FIG. 21 illustrates an example where a plurality of work areas are defined on the traveling route of a conveyance vehicle, as illustrated in FIG. 23, a wide work area where a plurality of conveyance vehicles can enter may be defined, and a conveyance vehicle may be stopped at any position within the work area. In such a case, the stop position of the conveyance vehicle can be changed according to the operator's position, so that the operator and the conveyance vehicle can collaborate, whereby the work efficiency is improved.

When the conveyance vehicle acquires the information triggering the stop destination determination, the object position detection unit 12 determines whether there is an object in each work area ahead on the route. FIG. 23 illustrates an example where the operator is at the position corresponding to the work area 114 on the closer side of the path. In this situation, in the conveyance vehicle 10, the object position detection unit 12 determines that the operator is at the position corresponding to the work area 114 and is next to the work area 114. Based on the position of an operator, a position that is on the track and is next to the operator position is determined to be the stop destination as a result of the stop destination determination, and the conveyance vehicle travels to and stops at the stop destination in the work area 114.

Preferred embodiments of the present disclosure have been described with reference to the accompanying drawings, but the technical scope of the present disclosure is not limited to such examples. It is apparent to those skilled in the technical field of the present disclosure that various examples of changes or modifications can be conceived of within the scope of the technical idea described in the appended claims, and these also naturally fall within the technical scope of the present disclosure.

The devices described herein may be implemented as stand-alone devices or as a plurality of devices some or the entirety of which is connected by a network (for example, a cloud server). For example, the control unit 260 and the recording unit 220 of the conveyance vehicle may be implemented by different servers connected to each other by a network. In the conveyance system described herein, an example is described where the maneuvering machine 3000, the operation management device 4000, and the input/output device 5000 are each formed by independent hardware and are connected to each other by a network. Alternatively, some or the entirety of the functions of the maneuvering machine 3000, the operation management device 4000, and the input/output device 5000 may be provided in the conveyance vehicle 10.

The series of processes implemented by the devices described herein may be achieved using software, hardware, and a combination of software and hardware.

A computer program can be created and implemented on a computer or other devices to achieve the functions of the control unit 260 in the present embodiment. A computer-readable recording medium storing such a computer program can also be provided. Examples of the recording medium include a magnetic disk, an optical disc, a magneto-optical disk, and a flash memory. The above-described computer program may be distributed, for example, over a network, without using a recording medium.

The processes described herein using a flowchart do not necessarily have to be executed in the order illustrated. Some of the processing steps may be performed in parallel. Additional processing steps may be employed, and some processing steps may be omitted.

The advantageous effects described herein are illustrative or exemplary only and not limiting. In other words, the technology of the present disclosure may produce other effects that are obvious to those skilled in the art from the description herein, either together with or in place of the above-described advantageous effects.

The following configurations are also within the technical scope of the present disclosure.
(Note 1) A conveyance system including a conveyance vehicle configured to travel along a guide line laid on a traveling road, in which
   the conveyance vehicle includes: a guide line detection unit configured to detect the guide line; an object position detection unit configured to detect information on a position of an object around the conveyance vehicle; and a stop position determination unit configured to determine a stop position of the conveyance vehicle based on a result of detection by the object position detection unit.
(Note 2) The conveyance system according to note 1, in which the conveyance vehicle further includes a storage unit configured to store information on at least one candidate stop position that is a candidate of the stop position, and the object position detection unit determines whether there is an object at the candidate stop position or determines a position of an object in an area of the candidate stop position, based on the information on the candidate stop position stored in the storage unit, and information on the position of the object detected.
(Note 3) The conveyance system according to note 2, in which the stop position determination unit determines the stop position based on whether there is an object at the candidate stop position or the position of the object in the area of the candidate stop position determined by the object position detection unit.
(Note 4) The conveyance system according to any one of notes 1 to 3, in which the stop position determination unit selects the stop position in an area of the candidate stop position other than a position where an object is determined to be present, based on the position of the object in the area of the candidate stop position determined by the object position detection unit.
(Note 5) The conveyance system according to any one of notes 1 to 3, in which the stop position determination unit selects as the stop position a position near a position where an object is determined to be present, based on the position of the object in an area of the candidate stop position determined by the object position detection unit.
(Note 6) The conveyance system according to any one of notes 1 to 5, in which when trigger information triggering the stop position determination is received from external of the conveyance vehicle, or position information on the conveyance vehicle acquired by the conveyance vehicle is a predetermined position, the object position detection unit detects a position of an object around the conveyance vehicle.
(Note 7) The conveyance system according to any one of notes 1 to 6, in which the conveyance vehicle outputs information on the stop position determined by the stop position determination unit to a display unit or notifies a device external to the conveyance vehicle of the information.
(Note 8) The conveyance system according to any one notes 1 to 7, in which when the object position detection unit detects an operator, the stop position determination unit determines to be the stop position, a position on the guide line near a position where the operator is detected.
(Note 9) The conveyance system according to any one of notes 1 to 8, in which the candidate stop position is defined to be one of a plurality of branches of the guide line branched, and the stop position determination unit performs the stop position determination processing before the conveyance vehicle passes through the branch of the guide line.
(Note 10) The conveyance system according to any one of notes 1 to 9, further including a mode switching unit configured to switch between a guided traveling mode under which traveling is performed along the guide line, and an autonomous traveling mode under which autonomous traveling is performed using a result of the detection by the object position detection unit, in an area in which the guide line is not laid.
(Note 11) The conveyance system according to any one of notes 1 to 10, in which the guide line includes at least either of a plurality of bar codes or a plurality of two-dimensional codes, the guide line detection unit includes a camera configured to capture an image of the guide line and acquires code information included in the bar codes or the two-dimensional codes from image information on the captured image, and the stop position determination unit performs the stop position determination when the guide line detection unit acquires the predetermined code information.
(Note 12) A conveyance system including: a guide line that is laid on a traveling road surface and includes a plurality of codes; and a conveyance vehicle configured to travel along the guide line, in which the guide line includes a main line that is the guide line along which the conveyance vehicle travels, and a sub line that is the guide line laid while being separated by a predetermined distance from or being branched from the main line,
   the conveyance vehicle includes a guide line detection unit configured to detect the guide line, and a traveling control unit configured to perform guide line following control to make the conveyance vehicle travel while maintaining a state in which the guide line is located within a detection range of the guide line detection unit, and the traveling control unit stops the guide line following control and performs predetermined traveling control determined in advance upon acquiring trigger information from the codes, and stops the predetermined traveling control and performs the guide line following control when the guide line detection unit detects the guide line that is the sub line while the predetermined traveling control is being performed.
(Note 13) A conveyance control method for a conveyance vehicle that travels along a guide line laid on a traveling road, the method including: a guide line detection step of detecting the guide line; an object position detection step of detecting information on a position of an object around the conveyance vehicle; and a stop position determination step of determining a stop position of the conveyance vehicle based on the information on the position of the object detected in the object position detection step.
(Note 14) The conveyance control method according to note 13, in which the conveyance vehicle includes a storage unit configured to store information on at least one candidate stop position that is a candidate of the stop position, and the method further includes a candidate stop position object determination step of determining whether there is an object at the candidate stop position or determines a position of an object in an area of the candidate stop position, based on the information on the candidate stop position stored in the storage unit, and information on the position of the object detected in the object position detection step.
(Note 15) The conveyance control method according to note 13 or 14, in which the stop position determination step includes determining the stop position based on whether there is an object at the candidate stop position or the position of the object in the area of the candidate stop position determined in the candidate stop position object determination step.
(Note 16) The conveyance control method according to any one of notes 13 to 15, in which the stop position determination step includes selecting the stop position in an area of the candidate stop position other than a position where an object is determined to be present, based on the position of the object in the area of the candidate stop position determined in the candidate stop position object determination step.
(Note 17) The conveyance control method according to any one of notes 13 to 15, in which the stop position determination step includes selecting as the stop position a position near a position where an object is determined to be present, based on the position of the object in an area of the candidate stop position determined in the candidate stop position object determination step.
(Note 18) The conveyance control method according to any one of notes 13 to 17, in which when trigger information triggering the stop position determination is received from external of the conveyance vehicle, or position information on the conveyance vehicle acquired by the conveyance vehicle is a predetermined position, the object position detection step is performed to detect a position of an object around the conveyance vehicle.
(Note 19) The conveyance control method according to any one of notes 13 to 18, further including, by the conveyance vehicle, a step of outputting information on the stop position determined by the stop position determination step to a display unit or notifying a device external to the conveyance vehicle of the information.
(Note 20) The conveyance control method according to any one notes 13 to 19, in which when in the object position detection step, an operator is detected, in the stop position determination step, a position on the guide line near a position where the operator is detected is determined to be the stop position.
(Note 21) The conveyance control method according to any one of notes 13 to 20, in which the candidate stop position is defined to be one of a plurality of branches of the guide line branched, and in the stop position determination step, the determination processing in the stop position determination step is performed before the conveyance vehicle passes through the branch of the guide line.
(Note 22) The conveyance control method according to any one of notes 13 to 21, further including a mode switching step of switching between a guided traveling mode under which traveling is performed along the guide line, and an autonomous traveling mode under which autonomous traveling is performed using a result of the detection in the candidate stop position object determination step, in an area in which the guide line is not laid.
(Note 23) The conveyance control method according to any one of notes 13 to 22, in which the guide line includes at least either of a plurality of bar codes or a plurality of two-dimensional codes, in the guide line detection step, code information included in the bar codes or the two-dimensional codes is acquired from image information on an image captured by a camera configured to capture an image of the guide line, and in the stop position determination step, the stop position determination is performed when the predetermined code information is acquired in the guide line detection step.
(Note 24) A conveyance control method for a conveyance vehicle that travels along a guide line that is laid on a traveling road surface and includes a plurality of codes, the guide line including a main line that is the guide line along which the conveyance vehicle travels, and a sub line that is the guide line laid while being separated by a predetermined distance from or being branched from the main line, the method including: a guide line detection step of detecting the guide line; and a traveling control step of performing guide line following control to make the conveyance vehicle travel while maintaining a state in which the guide line is located within a detection range in the guide line detection step, in which the traveling control step includes stopping the guide line following control and performing predetermined traveling control determined in advance upon acquiring trigger information from the codes, and stopping the predetermined traveling control and performing the guide line following control when in the guide line detection step, the guide line that is the sub line is detected while the predetermined traveling control is being performed.

### Reference Signs List

10 Conveyance vehicle
11 Coupling unit
12 Object position detection unit
13 Drive wheel
14 Non-drive wheel
16 Guide line detection unit
17 Magnetic sensor
18 Detection unit
110, 130 Guided traveling area
111, 131 Guide line
112, 132 Guided traveling mode start area
113 Branching point
114, 133 Work area
115, 134 Autonomous traveling mode start area
116 Magnetic marker
120 Autonomous traveling area
210 Communication unit
220 Recording unit
230 Detection unit
240 Input unit
250 Display unit
240 Control unit
280 Wheel driving unit
2000 Cart
2010 Coupling receiver
3000 Maneuvering machine
4000 Operation management device
5000 Input/output device
6000 Communication network
7000 External system

## Claims

1. A conveyance system comprising a conveyance vehicle configured to travel along a guide line laid on a traveling road,
the conveyance vehicle comprising:
a guide line detection unit configured to detect the guide line;
an object position detection unit configured to detect information on a position of an object around the conveyance vehicle; and
a stop position determination unit configured to determine a stop position of the conveyance vehicle based on a result of detection by the object position detection unit.

2. The conveyance system according to claim 1, wherein
the conveyance vehicle further includes a storage unit configured to store information on at least one candidate stop position that is a candidate of the stop position, and
the object position detection unit determines whether there is an object at the candidate stop position or determines a position of an object in an area of the candidate stop position, based on the information on the candidate stop position stored in the storage unit, and information on the position of the object detected.

3. The conveyance system according to claim 2, wherein the stop position determination unit determines the stop position based on whether there is an object at the candidate stop position or the position of the object in the area of the candidate stop position determined by the object position detection unit.

4. The conveyance system according to any one of claims 1 to 3, wherein the stop position determination unit selects the stop position in an area of the candidate stop position other than a position where an object is determined to be present, based on the position of the object in the area of the candidate stop position determined by the object position detection unit.

5. The conveyance system according to any one of claims 1 to 3, wherein the stop position determination unit selects as the stop position a position near a position where an object is determined to be present, based on the position of the object in an area of the candidate stop position determined by the object position detection unit.

6. The conveyance system according to any one of claims 1 to 5, wherein when trigger information triggering the stop position determination is received from external of the conveyance vehicle, or position information on the conveyance vehicle acquired by the conveyance vehicle is a predetermined position, the object position detection unit detects a position of an object around the conveyance vehicle.

7. The conveyance system according to any one of claims 1 to 6, wherein the conveyance vehicle outputs information on the stop position determined by the stop position determination unit to a display unit or notifies a device external to the conveyance vehicle of the information.

8. The conveyance system according to any one claims 1 to 7, wherein when the object position detection unit detects an operator, the stop position determination unit determines to be the stop position, a position on the guide line near a position where the operator is detected.

9. The conveyance system according to any one of claims 1 to 8, wherein
the candidate stop position is defined to be one of a plurality of branches of the guide line branched, and
the stop position determination unit performs the stop position determination processing before the conveyance vehicle passes through the branch of the guide line.

10. The conveyance system according to any one of claims 1 to 9, further comprising a mode switching unit configured to switch between a guided traveling mode under which traveling is performed along the guide line, and an autonomous traveling mode under which autonomous traveling is performed using a result of the detection by the object position detection unit, in an area in which the guide line is not laid.

11. The conveyance system according to any one of claims 1 to 10, wherein
the guide line includes at least either of a plurality of bar codes or a plurality of two-dimensional codes,
the guide line detection unit includes a camera configured to capture an image of the guide line and acquires code information included in the bar codes or the two-dimensional codes from image information on the captured image, and
the stop position determination unit performs the stop position determination when the guide line detection unit acquires the predetermined code information.

12. A conveyance system comprising:
a guide line that is laid on a traveling road surface and includes a plurality of codes; and
a conveyance vehicle configured to travel along the guide line, wherein
the guide line includes a main line that is the guide line along which the conveyance vehicle travels, and a sub line that is the guide line laid while being separated by a predetermined distance from or being branched from the main line,
the conveyance vehicle includes a guide line detection unit configured to detect the guide line, and a traveling control unit configured to perform guide line following control to make the conveyance vehicle travel while maintaining a state in which the guide line is located within a detection range of the guide line detection unit, and
the traveling control unit stops the guide line following control and performs predetermined traveling control determined in advance upon acquiring trigger information from the codes, and stops the predetermined traveling control and performs the guide line following control when the guide line detection unit detects the guide line that is the sub line while the predetermined traveling control is being performed.

13. A conveyance control method for a conveyance vehicle that travels along a guide line laid on a traveling road, the method comprising:
a guide line detection step of detecting the guide line;
an object position detection step of detecting information on a position of an object around the conveyance vehicle; and
a stop position determination step of determining a stop position of the conveyance vehicle based on the information on the position of the object detected in the object position detection step.

14. The conveyance control method according to claim 13, wherein
the conveyance vehicle includes a storage unit configured to store information on at least one candidate stop position that is a candidate of the stop position, and
the method further comprises a candidate stop position object determination step of determining whether there is an object at the candidate stop position or determines a position of an object in an area of the candidate stop position, based on the information on the candidate stop position stored in the storage unit, and information on the position of the object detected in the object position detection step.

15. The conveyance control method according to claim 13 or 14, wherein the stop position determination step includes determining the stop position based on whether there is an object at the candidate stop position or the position of the object in the area of the candidate stop position determined in the candidate stop position object determination step.

16. The conveyance control method according to any one of claims 13 to 15, wherein the stop position determination step includes selecting the stop position in an area of the candidate stop position other than a position where an object is determined to be present, based on the position of the object in the area of the candidate stop position determined in the candidate stop position object determination step.

17. The conveyance control method according to any one of claims 13 to 15, wherein the stop position determination step includes selecting as the stop position a position near a position where an object is determined to be present, based on the position of the object in an area of the candidate stop position determined in the candidate stop position object determination step.

18. The conveyance control method according to any one of claims 13 to 17, wherein when trigger information triggering the stop position determination is received from external of the conveyance vehicle, or position information on the conveyance vehicle acquired by the conveyance vehicle is a predetermined position, the object position detection step is performed to detect a position of an object around the conveyance vehicle.

19. The conveyance control method according to any one of claims 13 to 18, wherein further including, by the conveyance vehicle, a step of outputting information on the stop position determined by the stop position determination step to a display unit or notifying a device external to the conveyance vehicle of the information.

20. The conveyance control method according to any one claims 13 to 19, wherein when in the object position detection step, an operator is detected, in the stop position determination step, a position on the guide line near a position where the operator is detected is determined to be the stop position.

21. The conveyance control method according to any one of claims 13 to 20, wherein
the candidate stop position is defined to be one of a plurality of branches of the guide line branched, and
in the stop position determination step, the determination processing in the stop position determination step is performed before the conveyance vehicle passes through the branch of the guide line.

22. The conveyance control method according to any one of claims 13 to 21, further comprising a mode switching step of switching between a guided traveling mode under which traveling is performed along the guide line, and an autonomous traveling mode under which autonomous traveling is performed using a result of the detection in the candidate stop position object determination step, in an area in which the guide line is not laid.

23. The conveyance control method according to any one of claims 13 to 22, wherein
the guide line includes at least either of a plurality of bar codes or a plurality of two-dimensional codes,
in the guide line detection step, code information included in the bar codes or the two-dimensional codes is acquired from image information on an image captured by a camera configured to capture an image of the guide line, and
in the stop position determination step, the stop position determination is performed when the predetermined code information is acquired in the guide line detection step.

24. A conveyance control method for a conveyance vehicle that travels along a guide line that is laid on a traveling road surface and includes a plurality of codes, the guide line including a main line that is the guide line along which the conveyance vehicle travels, and a sub line that is the guide line laid while being separated by a predetermined distance from or being branched from the main line, the method comprising:
a guide line detection step of detecting the guide line; and
a traveling control step of performing guide line following control to make the conveyance vehicle travel while maintaining a state in which the guide line is located within a detection range in the guide line detection step, wherein
the traveling control step includes stopping the guide line following control and performing predetermined traveling control determined in advance upon acquiring trigger information from the codes, and stopping the predetermined traveling control and performing the guide line following control when in the guide line detection step, the guide line that is the sub line is detected while the predetermined traveling control is being performed.
